(19) **Europäisches Patentamt / European Patent Office / Office européen des brevets**

(11) **EP 4 694 431 A2**

(12) # EUROPEAN PATENT APPLICATION
published in accordance with Art. 153(4) EPC

(43) Date of publication:
**11.02.2026 Bulletin 2026/07**

(21) Application number: **24785304.7**

(22) Date of filing: **05.04.2024**

(51) International Patent Classification (IPC):
*H04W 64/00* (2009.01)    *H04W 24/08* (2009.01)
*H04W 72/231* (2023.01)    *H04L 5/00* (2006.01)
*G01S 5/02* (2010.01)

(52) Cooperative Patent Classification (CPC):
**G01S 5/02; H04L 5/00; H04W 24/08; H04W 64/00; H04W 72/231**

(86) International application number:
**PCT/KR2024/004497**

(87) International publication number:
**WO 2024/210605 (10.10.2024 Gazette 2024/41)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **06.04.2023 KR 20230045697**

(71) Applicant: **LG Electronics Inc.**
**Yeongdeungpo-gu**
**Seoul 07336 (KR)**

(72) Inventors:
• **HWANG, Seunggye**
 **Seoul 06772 (KR)**
• **SHIM, Jaenam**
 **Seoul 06772 (KR)**
• **KIM, Kijun**
 **Seoul 06772 (KR)**
• **KO, Hyunsoo**
 **Seoul 06772 (KR)**

(74) Representative: **Frenkel, Matthias Alexander**
**Wuesthoff & Wuesthoff**
**Patentanwälte und Rechtsanwalt PartG mbB**
**Schweigerstraße 2**
**81541 München (DE)**

(54) **METHOD AND DEVICE FOR TRANSMITTING AND RECEIVING SIGNALS IN WIRELESS COMMUNICATION SYSTEM**

(57) A method for a terminal to transmit a measurement report in a wireless communication system according to at least one of the examples disclosed in the specification may comprise: receiving positioning assistance information including information about a plurality of positioning reference units (PRUs) from a network; selecting at least one PRU among the plurality of PRUs on the basis of the positioning assistance information; determining at least one reference signal to be measured by the terminal among a plurality of reference signals on the basis of the selection of the at least one PRU; and transmitting a positioning-related measurement report on the basis of the measurement of the at least one determined reference signal.

**FIG. 16**

Receive positioning assistance information   B05

Select at least one PRU   B10

Determine reference signal to be measured by UE   B15

Transmit positioning-related measurement report   B20

**Description**

**TECHNICAL FIELD**

The present disclosure relates to a wireless communication system, and more particularly, to a method and apparatus for transmitting and receiving an uplink/downlink signal.

**BACKGROUND**

Generally, a wireless communication system is developing to diversely cover a wide range to provide such a communication service as an audio communication service, a data communication service and the like. The wireless communication is a sort of a multiple access system capable of supporting communications with multiple users by sharing available system resources (e.g., bandwidth, transmit power, etc.). For example, the multiple access system may be any of a code division multiple access (CDMA) system, a frequency division multiple access (FDMA) system, a time division multiple access (TDMA) system, an orthogonal frequency division multiple access (OFDMA) system, and a single carrier frequency division multiple access (SC-FDMA) system.

**DISCLOSURE**

**TECHNICAL PROBLEM**

An object of the disclosure is to provide a method and device for transmitting or receiving signals more accurately and efficiently in a wireless communication system.

The object of the disclosure is not limited to this, and other objects may be inferred from the disclosed embodiments.

**TECHNICAL SOLUTION**

In an aspect of the present disclosure, provided herein is a method of transmitting a measurement report by a user equipment (UE) in a wireless communication system. The method may include: receiving positioning assistance information including information regarding a plurality of positioning reference units (PRUs) from a network; selecting at least one PRU from among the plurality of PRUs based on the positioning assistance information; determining at least one reference signal to be measured by the UE from among a plurality of reference signals based on the selection of the at least one PRU; and transmitting a positioning-related measurement report based on measurement of the determined at least one reference signal.

Each of the at least one reference signal measured by the UE may be identical to a reference signal measured by each PRU selected by the UE.

The UE and each PRU selected by the UE may respectively measure the at least one reference signal on a same time resource.

The information regarding the plurality of PRUs may include at least one of resource information for each reference signal measured by each PRU or measurement timing information for each PRU.

The at least one PRU may be selected based on PRU location information.

The information regarding the plurality of PRUs may include the PRU location information.

The PRU location information may be obtained through wireless sensing for integrated sensing and communication (ISAC).

Validity of the positioning assistance information may be determined based on at least one of the measurement of the at least one reference signal by the UE or a timer.

The measurement of the at least one reference signal by the UE may include reference signal carrier phase measurement.

In another aspect of the present disclosure, provided herein is a processor-readable recording medium having recorded thereon a program for the above-described method.

In another aspect of the present disclosure, provided herein is a device for wireless communication. The device includes: a memory configured to store instructions; and a processor configured to perform operations by executing the instructions. The operations of the processor may include: receiving positioning assistance information including information regarding a plurality of PRUs from a network; selecting at least one PRU from among the plurality of PRUs based on the positioning assistance information; determining at least one reference signal to be measured by the device from among a plurality of reference signals based on the selection of the at least one PRU; and transmitting a positioning-related measurement report based on measurement of the determined at least one reference signal.

The device may further include a transceiver.

The device may be a UE operating in a wireless communication system.

The device may be a processing device configured to control a UE operating in a wireless communication system.

In another aspect of the present disclosure, provided herein is a method of receiving a measurement report by a network node in a wireless communication system. The method may include: transmitting positioning assistance information including information regarding a plurality of PRUs to a UE; receiving a measurement report from the UE on at least one of a plurality of reference signals measured by the plurality of PRUs; selecting at least one PRU from among the plurality of PRUs that measures a same reference signal as measured by the UE based on the measurement report from the UE; and determining a location of the UE based on the measurement report from the UE and a measurement report from the selected at least one PRU.

In a further aspect of the present disclosure, provided herein is a network node configured to operate in a wireless communication system. The network node includes: a memory configured to store instructions; and a processor configured to perform operations by executing the instructions. The operations of the processor may include: transmitting positioning assistance information including information regarding a plurality of PRUs to a UE; receiving a measurement report from the UE on at least one of a plurality of reference signals measured by the plurality of PRUs; selecting at least one PRU from among the plurality of PRUs that measures a same reference signal as measured by the UE based on the measurement report from the UE; and determining a location of the UE based on the measurement report from the UE and a measurement report from the selected at least one PRU.

## ADVANTAGEOUS EFFECTS

According to an embodiment of the present disclosure, a signal can be more accurately and efficiently transmitted or received in a wireless communication system.

The effect of the disclosure is not limited to this, and other advantageous effects may be inferred from the disclosed embodiments.

## BRIEF DESCRIPTION OF THE DRAWINGS

FIG. 1 illustrates physical channels used in a 3rd generation partnership project (3GPP) system as an exemplary wireless communication system, and a general signal transmission method using the same.

FIG. 2 illustrates a radio frame structure.

FIG. 3 illustrates a resource grid of a slot.

FIG. 4 illustrates exemplary mapping of physical channels in a slot

FIG. 5 illustrates an exemplary physical downlink shared channel (PDSCH) reception and acknowledgement/negative acknowledgement (ACK/NACK) transmission process.

FIG. 6 illustrates an exemplary physical uplink shared channel (PUSCH) transmission process.

FIG. 7 illustrates an example of setting a positioning protocol.

FIG. 8 illustrates an example of OTDOA.

FIG. 9 illustrates an example of Multi RTT.

FIG. 10 illustrates a procedure for operating a network node (e.g., an upper node of a user equipment (UE), location management function (LMF), etc.) according to an embodiment.

FIG. 11 illustrates a UE operation procedure for performing positioning measurement.

FIG. 12 illustrates various integrated sensing and communication (ISAC) environments.

FIG. 13 illustrates an example of a single differencing method for a downlink (DL) positioning reference signal (DL PRS).

FIG. 14 illustrates an example of a double differencing method for a DL PRS.

FIG. 15 is a diagram for explaining a user equipment (UE) positioning-related procedure according to an embodiment.

FIG. 16 illustrates a flow of a method for transmitting a measurement report by a UE according to an embodiment.

FIG. 17 illustrates a flow of a method for receiving a measurement report by a network node according to an embodiment.

FIGS. 18 to 21 illustrate an example of a communication system 1 and wireless devices applicable to the present disclosure.

## DETAILED DESCRIPTION

Embodiments of the present disclosure are applicable to a variety of wireless access technologies such as code division multiple access (CDMA), frequency division multiple access (FDMA), time division multiple access (TDMA), orthogonal frequency division multiple access (OFDMA), and single carrier frequency division multiple access (SC-FDMA). CDMA can be implemented as a radio technology such as Universal Terrestrial Radio Access (UTRA) or CDMA2000. TDMA can be implemented as a radio technology such as Global System for Mobile communications (GSM)/General Packet Radio Service (GPRS)/Enhanced Data Rates for GSM Evolution (EDGE). OFDMA can be implemented as a radio technology such as Institute of Electrical and Electronics Engineers (IEEE) 802.11 (Wireless Fidelity (Wi-Fi)), IEEE 802.16 (Worldwide interoperability for Microwave Access (WiMAX)), IEEE 802.20, and Evolved UTRA (E-UTRA). UTRA is a part of Universal Mobile Telecommunications System (UMTS). 3rd Generation Partnership Project (3GPP) Long Term Evolution (LTE) is part of Evolved UMTS (E-UMTS) using E-UTRA, and LTE-Advanced (A) is an evolved version of 3GPP LTE. 3GPP NR (New Radio or New Radio Access Technology) is an evolved version of 3GPP LTE/LTE-A.

As more and more communication devices require a larger communication capacity, there is a need for mobile broadband communication enhanced over conventional radio access technology (RAT). In addition, massive Machine Type Communications (MTC) capable of providing a variety of services anywhere and anytime by connecting multiple devices and objects is another important issue to be considered for next generation communications. Communication system design considering services/UEs sensitive to reliability and latency is also under discussion. As such, introduction of new radio access technology considering enhanced mobile broadband communication (eMBB), massive MTC, and Ultra-Reliable and Low Latency Communication (URLLC) is being discussed. In an embodiment of the present disclosure, for simplicity, this technology will be referred to as NR (New Radio or New RAT).

The term "base station" used in this specification may be replaced with terms such as a fixed station, Node B, gNode B (gNB), access point (AP), cell, or transmission and reception point (TRP). The term "relay" may be replaced with terms such as a relay node (RN) or relay station. In addition, the term "terminal" may be replaced with terms such as a user equipment (UE), mobile station (MS), mobile subscriber station (MSS), or subscriber station (SS).

For the sake of clarity, 3GPP NR is mainly described, but the technical idea of the present disclosure is not limited thereto.

For the background art relevant to the present disclosure, the definitions of terms, and abbreviations, the following documents may be incorporated by reference.

- 38.211: Physical channels and modulation
- 38.212: Multiplexing and channel coding
- 38.213: Physical layer procedures for control
- 38.214: Physical layer procedures for data
- 38.215: Physical layer measurements
- 38.300: NR and NG-RAN Overall Description
- 38.304: User Equipment (UE) procedures in idle mode and in RRC Inactive state
- 38.321Medium Access Control (MAC) protocol specification
- 38.331: Radio Resource Control (RRC) protocol specification
- 37.213: Introduction of channel access procedures to unlicensed spectrum for NR-based access
- 36.355: LTE Positioning Protocol
- 37.355: LTE Positioning Protocol

Terms and Abbreviations

- 5GC: 5G Core Network
- 5GS: 5G System
- AoA: Angle of Arrival
- AP: Access Point
- CID: Cell ID
- E-CID: Enhanced Cell ID
- GNSS: Global Navigation Satellite System
- GPS: Global Positioning System
- LCS: LoCation Service
- LMF: Location Management Function

- LPP: LTE Positioning Protocol
- MO-LR: Mobile Originated Location Request
- MT-LR: Mobile Terminated Location Request
- NRPPa: NR Positioning Protocol A
- OTDOA: Observed Time Difference Of Arrival
- PDU: Protocol Data Unit
- PRS: Positioning Reference Signal
- RRM: Radio Resource Management
- RSSI: Received Signal Strength Indicator
- RSTD: Reference Signal Time Difference
- ToA: Time of Arrival
- TP: Transmission Point
- TRP: Transmission and Reception Point
- UE: User Equipment
- SS: Search Space
- CSS: Common Search Space
- USS: UE-specific Search Space
- PDCCH: Physical Downlink Control Channel
- PDSCH: Physical Downlink Shared Channel;
- PUCCH: Physical Uplink Control Channel;
- PUSCH: Physical Uplink Shared Channel;
- DCI: Downlink Control Information
- UCI: Uplink Control Information
- SI: System Information
- SIB: System Information Block
- MIB: Master Information Block
- RRC: Radio Resource Control
- DRX: Discontinuous Reception
- RNTI: Radio Network Temporary Identifier
- CSI: Channel state information
- PCell: Primary Cell
- SCell: Secondary Cell
- PSCell: Primary SCG (Secondary Cell Group) Cell
- CA: Carrier Aggregation
- WUS: Wake up Signal
- TX: Transmitter
- RX: Receiver
- RSTD: Reference Signal Time Difference
- RS: Reference Signal
- PRS: Positioning Reference Signal
- SRS: Sounding Reference Signal

In a wireless communication system, a user equipment (UE) receives information through downlink (DL) from a base station (BS) and transmit information to the BS through uplink (UL). The information transmitted and received by the BS and the UE includes data and various control information and includes various physical channels according to type/usage of the information transmitted and received by the UE and the BS.

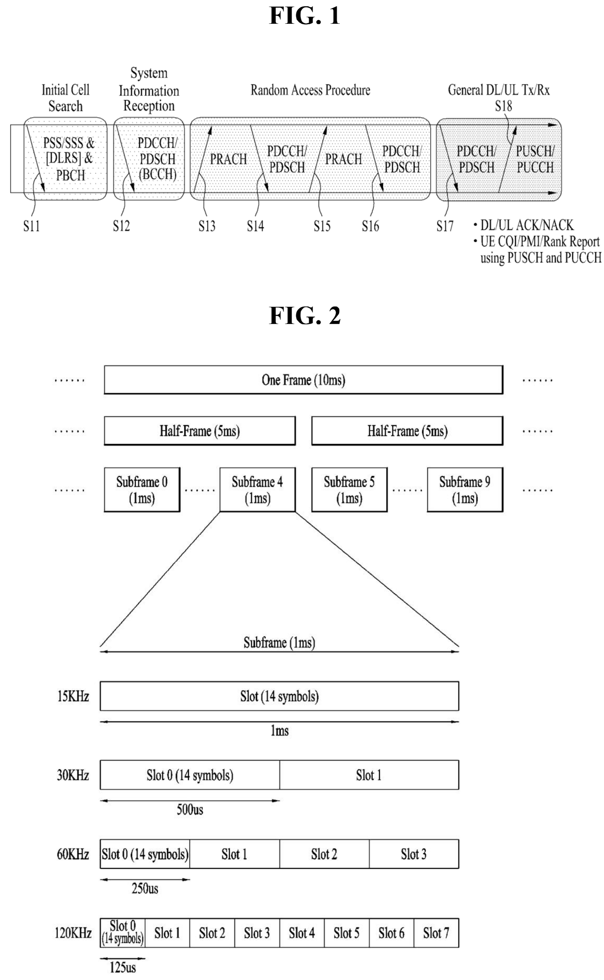

FIG. 1 illustrates physical channels used in a 3GPP NR system and a general signal transmission method using the same.

When a UE is powered on again from a power-off state or enters a new cell, the UE performs an initial cell search procedure, such as establishment of synchronization with a BS, in step S101. To this end, the UE receives a synchronization signal block (SSB) from the BS. The SSB includes a primary synchronization signal (PSS), a secondary synchronization signal (SSS), and a physical broadcast channel (PBCH). The UE establishes synchronization with the BS based on the PSS/SSS and acquires information such as a cell identity (ID). The UE may acquire broadcast information in a cell based on the PBCH. The UE may receive a DL reference signal (RS) in an initial cell search procedure to monitor a DL channel status.

After initial cell search, the UE may acquire more specific system information by receiving a physical downlink control channel (PDCCH) and receiving a physical downlink shared channel (PDSCH) based on information of the PDCCH in step S102.

The UE may perform a random access procedure to access the BS in steps S103 to S106. For random access, the UE may transmit a preamble to the BS on a physical random access channel (PRACH) (S103) and receive a response message for preamble on a PDCCH and a PDSCH corresponding to the PDCCH (S104). In the case of contention-based random access, the UE may perform a contention resolution procedure by further transmitting the PRACH (S105) and receiving a PDCCH and a PDSCH corresponding to the PDCCH (S106).

After the foregoing procedure, the UE may receive a PDCCH/PDSCH (S107) and transmit a physical uplink shared channel (PUSCH)/physical uplink control channel (PUCCH) (S108), as a general downlink/uplink signal transmission procedure. Control information transmitted from the UE to the BS is referred to as uplink control information (UCI). The UCI includes hybrid automatic repeat and request acknowledgement/negative-acknowledgement (HARQ-ACK/NACK), scheduling request (SR), channel state information (CSI), etc. The CSI includes a channel quality indicator (CQI), a precoding matrix indicator (PMI), a rank indicator (RI), etc. While the UCI is transmitted on a PUCCH in general, the UCI may be transmitted on a PUSCH when control information and traffic data need to be simultaneously transmitted. In addition, the UCI may be aperiodically transmitted through a PUSCH according to request/command of a network.

FIG. 2 illustrates a radio frame structure. In NR, uplink and downlink transmissions are configured with frames. Each radio frame has a length of 10 ms and is divided into two 5-ms half-frames (HF). Each half-frame is divided into five 1-ms subframes (SFs). A subframe is divided into one or more slots, and the number of slots in a subframe depends on subcarrier spacing (SCS). Each slot includes 12 or 14 Orthogonal Frequency Division Multiplexing (OFDM) symbols according to a cyclic prefix (CP). When a normal CP is used, each slot includes 14 OFDM symbols. When an extended CP is used, each slot includes 12 OFDM symbols.

Table 1 exemplarily shows that the number of symbols per slot, the number of slots per frame, and the number of slots per subframe vary according to the SCS when the normal CP is used.

[Table 1]

| SCS ($15*2^u$) | $N^{slot}_{symb}$ | $N^{frame,u}_{slot}$ | $N^{subframe,u}_{slot}$ |
|---|---|---|---|
| 15KHz (u=0) | 14 | 10 | 1 |
| 30KHz (u=1) | 14 | 20 | 2 |
| 60KHz (u=2) | 14 | 40 | 4 |
| 120KHz (u=3) | 14 | 80 | 8 |
| 240KHz (u=4) | 14 | 160 | 16 |
| $N^{slot}_{symb}$: Number of symbols in a slot<br>$N^{frame,u}_{slot}$: Number of slots in a frame<br>$N^{subframe,u}_{slot}$: Number of slots in a subframe | | | |

Table 2 illustrates that the number of symbols per slot, the number of slots per frame, and the number of slots per subframe vary according to the SCS when the extended CP is used.

[Table 2]

| SCS ($15*2^u$) | $N^{slot}_{symb}$ | $N^{frame,u}_{slot}$ | $N^{subframe,u}_{slot}$ |
|---|---|---|---|
| 60KHz (u=2) | 12 | 40 | 4 |

The structure of the frame is merely an example. The number of subframes, the number of slots, and the number of symbols in a frame may vary.

In the NR system, OFDM numerology (e.g., SCS) may be configured differently for a plurality of cells aggregated for one UE. Accordingly, the (absolute time) duration of a time resource (e.g., an SF, a slot or a TTI) (for simplicity, referred to as a time unit (TU)) consisting of the same number of symbols may be configured differently among the aggregated cells. Here, the symbols may include an OFDM symbol (or a CP-OFDM symbol) and an SC-FDMA symbol (or a discrete Fourier transform-spread-OFDM (DFT-s-OFDM) symbol).

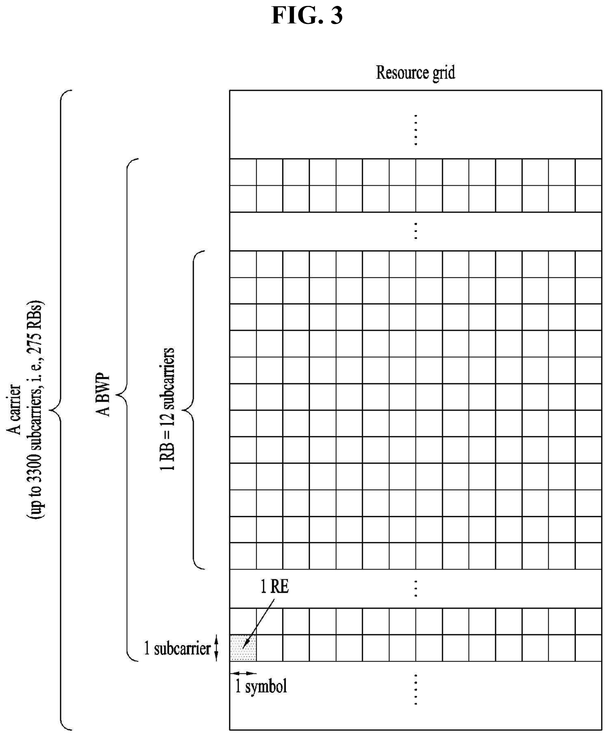

FIG. 3 illustrates a resource grid of a slot. A slot includes a plurality of symbols in the time domain. For example, when the normal CP is used, the slot includes 14 symbols. However, when the extended CP is used, the slot includes 12 symbols. A carrier includes a plurality of subcarriers in the frequency domain. A resource block (RB) is defined as a plurality of consecutive subcarriers (e.g., 12 consecutive subcarriers) in the frequency domain. A bandwidth part (BWP) may be defined to be a plurality of consecutive physical RBs (PRBs) in the frequency domain and correspond to a single numerology (e.g., SCS, CP length, etc.). The carrier may include up to N (e.g., 5) BWPs. Data communication may be performed through an activated BWP, and only one BWP may be activated for one UE. In the resource grid, each element is referred to as a resource element (RE), and one complex symbol may be mapped to each RE.

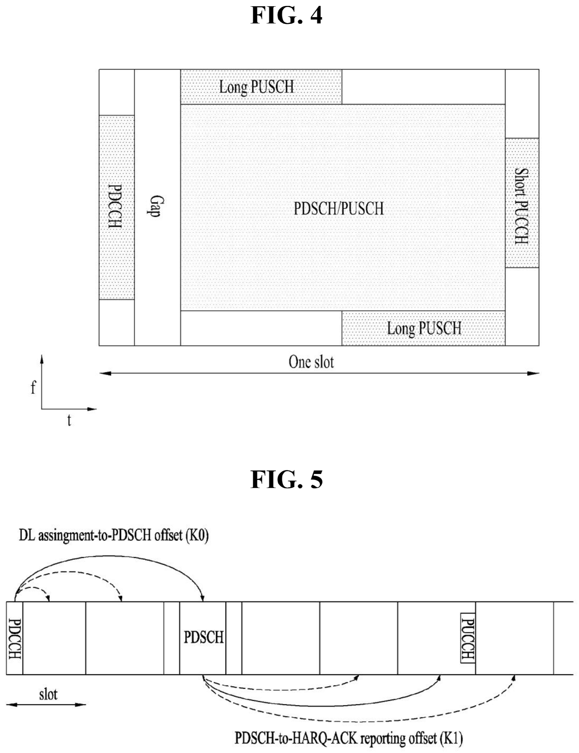

FIG. 4 illustrates an example of mapping physical channels in a slot. In an NR system, a frame is characterized by a self-contained structure in which all of a DL control channel, DL or UL data, and a UL channel may be included in one slot. For example, the first N symbols of a slot may be used to carry a DL channel (e.g., PDCCH) (hereinafter, referred to as a DL control region), and the last M symbols of the slot may be used to carry a UL channel (e.g., PUCCH) (hereinafter, referred to as a UL control region). Each of N and M is an integer equal to or larger than 0. A resource area (hereinafter, referred to as a data region) between the DL control region and the UL control region may be used to transmit DL data (e.g., PDSCH) or UL data (e.g., PUSCH). A guard period (GP) provides a time gap for switching from a transmission mode to a reception mode or from the reception mode to the transmission mode. Some symbols at a DL-to-UL switching time in a subframe may be configured as a GP.

The PDCCH delivers DCI. For example, the PDCCH (i.e., DCI) may carry information about a transport format and resource allocation of a DL shared channel (DL-SCH), resource allocation information of an uplink shared channel (UL-SCH), paging information on a paging channel (PCH), system information on the DL-SCH, information on resource allocation of a higher-layer control message such as an RAR transmitted on a PDSCH, a transmit power control command, information about activation/release of configured scheduling, and so on. The DCI includes a cyclic redundancy check (CRC). The CRC is masked with various identifiers (IDs) (e.g. a radio network temporary identifier (RNTI)) according to an owner or usage of the PDCCH. For example, if the PDCCH is for a specific UE, the CRC is masked by a UE ID (e.g., cell-RNTI (C-RNTI)). If the PDCCH is for a paging message, the CRC is masked by a paging-RNTI (P-RNTI). If the PDCCH is for system information (e.g., a system information block (SIB)), the CRC is masked by a system information RNTI (SI-RNTI). When the PDCCH is for an RAR, the CRC is masked by a random access-RNTI (RA-RNTI).

FIG. 5 illustrates an exemplary PDSCH reception and ACK/NACK transmission process. Referring to FIG. 5, the UE may detect a PDCCH in slot #n. The PDCCH includes DL scheduling information (e.g., DCI format 1_0 or DCI format 1_1), and indicates a DL assignment-to-PDSCH offset, K0 and a PDSCH-HARQ-ACK reporting offset, K1. After receiving a PDSCH in slot #(n+K0) according to the scheduling information of slot #n, the UE may transmit UCI on a PUCCH in slot #(n+K1). The UCI may include an HARQ-ACK response to the PDSCH. In the case where the PDSCH is configured to carry one TB at maximum, the HARQ-ACK response may be configured in one bit. In the case where the PDSCH is configured to carry up to two TBs, the HARQ-ACK response may be configured in 2 bits if spatial bundling is not configured and in 1 bit if spatial bundling is configured. When slot #(n+K1) is designated as an HARQ-ACK transmission timing for a plurality of PDSCHs, UCI transmitted in slot #(n+K1) includes HARQ-ACK responses to the plurality of PDSCHs.

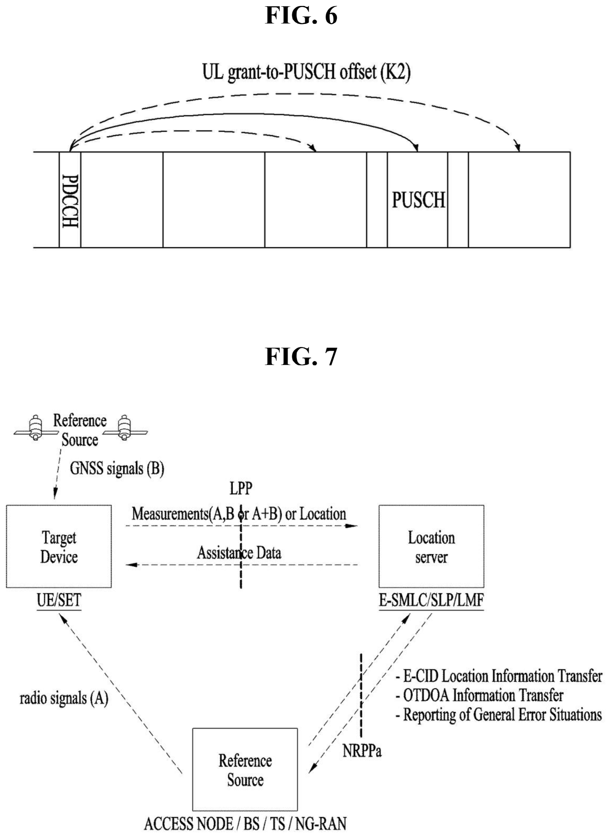

FIG. 6 illustrates an exemplary PUSCH transmission procedure. Referring to FIG. 6, the UE may detect a PDCCH in slot #n. The PDCCH includes DL scheduling information (e.g., DCI format 1_0 or 1_1). The UE may then transmit a PUSCH in slot #(n+K2) according to the scheduling information in slot #n. The PUSCH includes a UL-SCH TB.

## Positioning

Positioning may refer to determining the geographical position and/or velocity of the UE based on measurement of radio signals. Location information may be requested by and reported to a client (e.g., an application) associated with to the UE. The location information may also be requested by a client within or connected to a core network. The location information may be reported in standard formats such as formats for cell-based or geographical coordinates, together with estimated errors of the position and velocity of the UE and/or a positioning method used for positioning.

FIG. 7 is a diagram illustrating an exemplary positioning protocol configuration for positioning a UE, to which various embodiments are applicable.

Referring to FIG. 7, an LTE positioning protocol (LPP) may be used as a point-to-point protocol between a location server (E-SMLC and/or SLP and/or LMF) and a target device (UE and/or SET), for positioning the target device using position-related measurements obtained from one or more reference resources. The target device and the location server may exchange measurements and/or location information based on signal A and/or signal B over the LPP.

NRPPa may be used for information exchange between a reference source (access node and/or BS and/or TP and/or NG-RAN node) and the location server.

The NRPPa protocol may provide the following functions.

- E-CID Location Information Transfer. This function allows the reference source to exchange location information with the LMF for the purpose of E-CID positioning.
- OTDOA Information Transfer. This function allows the reference source to exchange information with the LMF for the purpose of OTDOA positioning.
- Reporting of General Error Situations. This function allows reporting of general error situations, for which function-specific error messages have not been defined.

Positioning methods supported in the NG-RAN may include a GNSS, an OTDOA, an E-CID, barometric sensor positioning, WLAN positioning, Bluetooth positioning, a TBS, uplink time difference of arrival (UTDOA) etc. Although any one of the positioning methods may be used for UE positioning, two or more positioning methods may be used for UE positioning.

OTDOA (Observed Time Difference of Arrival)

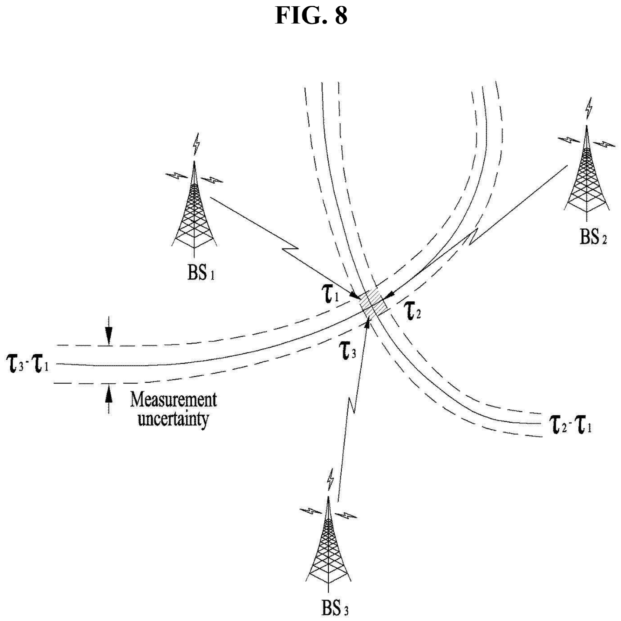

FIG. 8 is a diagram illustrating an observed time difference of arrival (OTDOA) positioning method, to which various embodiments are applicable;

The OTDOA positioning method uses time measured for DL signals received from multiple TPs including an eNB, an ng-eNB, and a PRS-only TP by the UE. The UE measures time of received DL signals using location assistance data received from a location server. The position of the UE may be determined based on such a measurement result and geographical coordinates of neighboring TPs.

The UE connected to the gNB may request measurement gaps to perform OTDOA measurement from a TP. If the UE is not aware of an SFN of at least one TP in OTDOA assistance data, the UE may use autonomous gaps to obtain an SFN of an OTDOA reference cell prior to requesting measurement gaps for performing reference signal time difference (RSTD) measurement.

Here, the RSTD may be defined as the smallest relative time difference between two subframe boundaries received from a reference cell and a measurement cell. That is, the RSTD may be calculated as the relative time difference between the start time of a subframe received from the measurement cell and the start time of a subframe from the reference cell that is closest to the subframe received from the measurement cell. The reference cell may be selected by the UE.

For accurate OTDOA measurement, it is necessary to measure time of arrival (ToA) of signals received from geographically distributed three or more TPs or BSs. For example, ToA for each of TP 1, TP 2, and TP 3 may be measured, and RSTD for TP 1 and TP 2, RSTD for TP 2 and TP 3, and RSTD for TP 3 and TP 1 are calculated based on three ToA values. A geometric hyperbola is determined based on the calculated RSTD values and a point at which curves of the hyperbola cross may be estimated as the position of the UE. In this case, accuracy and/or uncertainty for each ToA measurement may occur and the estimated position of the UE may be known as a specific range according to measurement uncertainty.

For example, RSTD for two TPs may be calculated based on Equation 1 below.

[Equation 1]

$$RSTDi,_1 = \frac{\sqrt{(x_t - x_i)^2 + (y_t - y_i)^2}}{c} - \frac{\sqrt{(x_t - x_1)^2 + (y_t - y_1)^2}}{c} + (T_i - T_1) + (n_i - n_1)$$

In Equation 1, c is the speed of light, $\{x_t, y_t\}$ are (unknown) coordinates of a target UE, $\{x_i, y_i\}$ are (known) coordinates of a TP, and $\{x_1, y_1\}$ are coordinates of a reference TP (or another TP). Here, $(T_i - T_1)$ is a transmission time offset between two TPs, referred to as "real time differences" (RTDs), and $n_i$ and $n_1$ are UE ToA measurement error values.

E-CID (Enhanced Cell ID)

In a cell ID (CID) positioning method, the position of the UE may be measured based on geographical information of a serving ng-eNB, a serving gNB, and/or a serving cell of the UE. For example, the geographical information of the serving ng-eNB, the serving gNB, and/or the serving cell may be acquired by paging, registration, etc.

The E-CID positioning method may use additional UE measurement and/or NG-RAN radio resources in order to improve UE location estimation in addition to the CID positioning method. Although the E-CID positioning method partially may utilize the same measurement methods as a measurement control system on an RRC protocol, additional measurement only for UE location measurement is not generally performed. In other words, an additional measurement configuration or measurement control message may not be provided for UE location measurement. The UE does not expect that an additional measurement operation only for location measurement will be requested and the UE may report a measurement value obtained by generally measurable methods.

For example, the serving gNB may implement the E-CID positioning method using an E-UTRA measurement value provided by the UE.

Measurement elements usable for E-CID positioning may be, for example, as follows.

UE measurement: E-UTRA reference signal received power (RSRP), E-UTRA reference signal received quality (RSRQ), UE E-UTRA reception (Rx)-transmission (Tx) time difference, GERAN/WLAN reference signal strength indication (RSSI), UTRAN common pilot channel (CPICH) received signal code power (RSCP), and/or UTRAN CPICH Ec/Io

E-UTRAN measurement: ng-eNB Rx-Tx time difference, timing advance ($T_{ADV}$), and/or AoA

Here, $T_{ADV}$ may be divided into Type 1 and Type 2 as follows.

$$T_{ADV} \text{ Type } 1 = (\text{ng-eNB Rx-Tx time difference}) + (\text{UE E-UTRA Rx-Tx time difference})$$

$$T_{ADV} \text{ Type } 2 = \text{ng-eNB Rx-Tx time difference}$$

AoA may be used to measure the direction of the UE. AoA is defined as the estimated angle of the UE counterclockwise from the eNB/TP. In this case, a geographical reference direction may be north. The eNB/TP may use a UL signal such as an SRS and/or a DMRS for AoA measurement. The accuracy of measurement of AoA increases as the arrangement of an antenna array increases. When antenna arrays are arranged at the same interval, signals received at adjacent antenna elements may have constant phase rotate.

UTDOA (Uplink Time Difference of Arrival)

UTDOA is a method of determining the location of a UE by estimating the arrival time of the SRS. When calculating the estimated SRS arrival time, the location of the UE can be estimated through an arrival time difference with another cell (or base station/TP) by using the serving cell as a reference cell. To implement UTDOA, the E-SMLC may indicate a serving cell of the target UE in order to instruct the target UE to transmit SRS. In addition, E-SMLC can provide configuration such as periodic/aperiodic SRS, bandwidth and frequency/group/sequence hopping.

Multi RTT (round trip time)

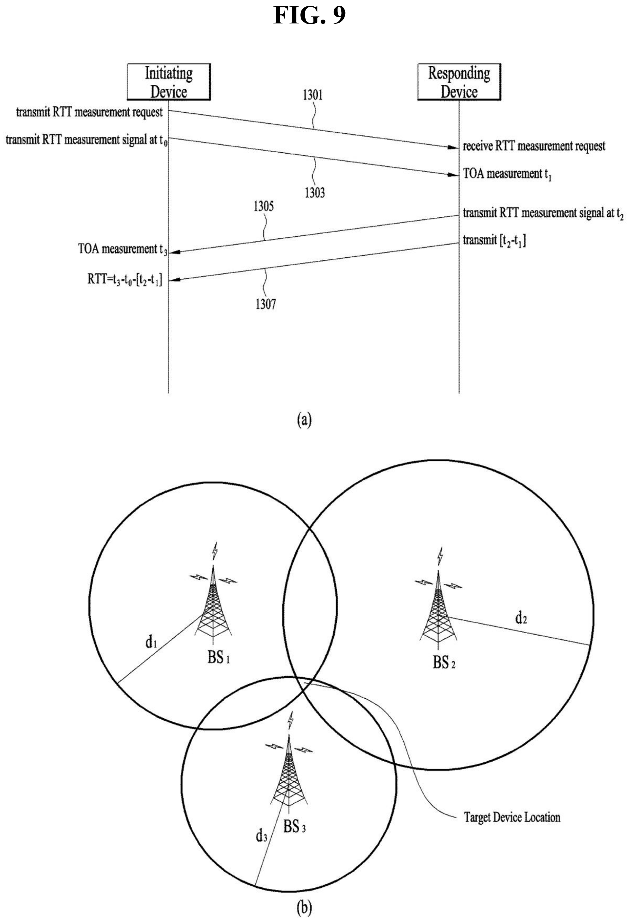

FIG. 9 is a diagram illustrating an exemplary multi-round trip time (multi-RTT) positioning method to which various embodiments are applicable.
Referring to FIG. 9(a), an exemplary RTT procedure is illustrated, in which an initiating device and a responding device perform ToA measurements, and the responding device provides ToA measurements to the initiating device, for RTT measurement (calculation). The initiating device may be a TRP and/or a UE, and the responding device may be a UE and/or a TRP.
The initiating device may transmit an RTT measurement request, and the responding device may receive the RTT measurement request (1301).
The initiating device may transmit an RTT measurement signal at $t_0$ and the responding device may acquire a ToA measurement t1(1303).
The responding device may transmit an RTT measurement signal at t2 and the initiating device may acquire a ToA measurement t3 (1305).
The responding device may transmit information about [t2-t1], and the initiating device may receive the information and calculate an RTT by Equation 2 (1307). The information may be transmitted and received based on a separate signal or in the RTT measurement signal (1305).

[Equation 2]

$$RTT = t_3 - t_0 - [t_2 - t_1]$$

Referring to FIG. 9(b), an RTT may correspond to a double-range measurement between two devices. Positioning estimation may be performed from the corresponding information, and multilateration may be used for the positioning estimation. $d_1$, $d_2$, and $d_3$ may be determined based on the measured RTT, and the location of a target device may be determined to be the intersection of the circumferences of circles with radiuses of $d_1$, $d_2$, and $d_3$, in which $BS_1$, $BS_2$, and $BS_3$ (or TRPs) are centered, respectively.

NG-RAN Positioning Architecture and Procedures

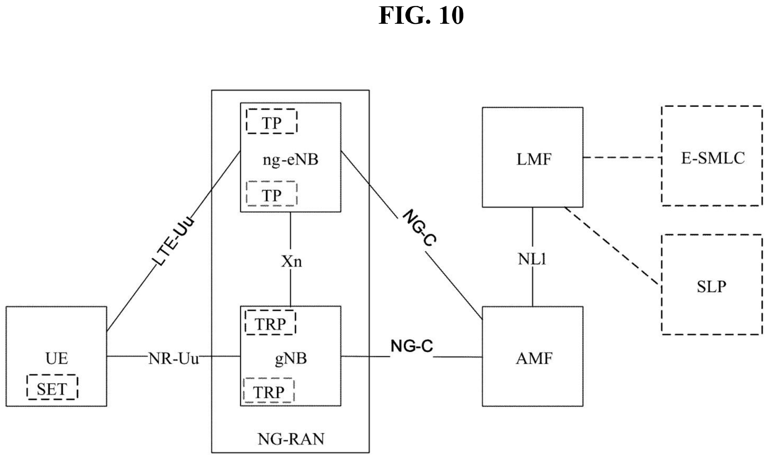

FIG. 10 illustrates a positioning structure of a next generation (NG) radio access network (RAN). The NG RAN may be referred to as a NR RAN or 5G RAN.

An AMF may receive a request for location services related to a specific target UE from other entities (e.g., gateway mobile location centre (GMLC) or UE) or may decide to initiate the location services itself on behalf of the specific target UE (e.g., in the case of IP multimedia subsystem (IMS) emergency calls). Subsequently, the AMF may forward the location service request to an LMF. The LMF may process the location service request, where processing the location service request may include transmitting assistance data to the target UE for UE-based and/or UE-assisted positioning and/or positioning of the target UE. The LMF transmits location service results (e.g., location estimates for the UE) to the AMF. When the location services are requested by other entities (e.g., GMLC or UE), the AMF transmits the location service results to the other entities.

An NG-RAN node may control TRPs/TPs such as RRM or DL-PRS only TPs to support a PRS-based terrestrial beacon system (TBS).

The LMF may be connected to an enhanced serving mobile location centre (E-SMLC) to access universal terrestrial radio access network (UTRAN) information.

The LMF can be connected to a secure user plane location (SUPL) location platform (SLP), which is responsible for positioning relative to the user plane.

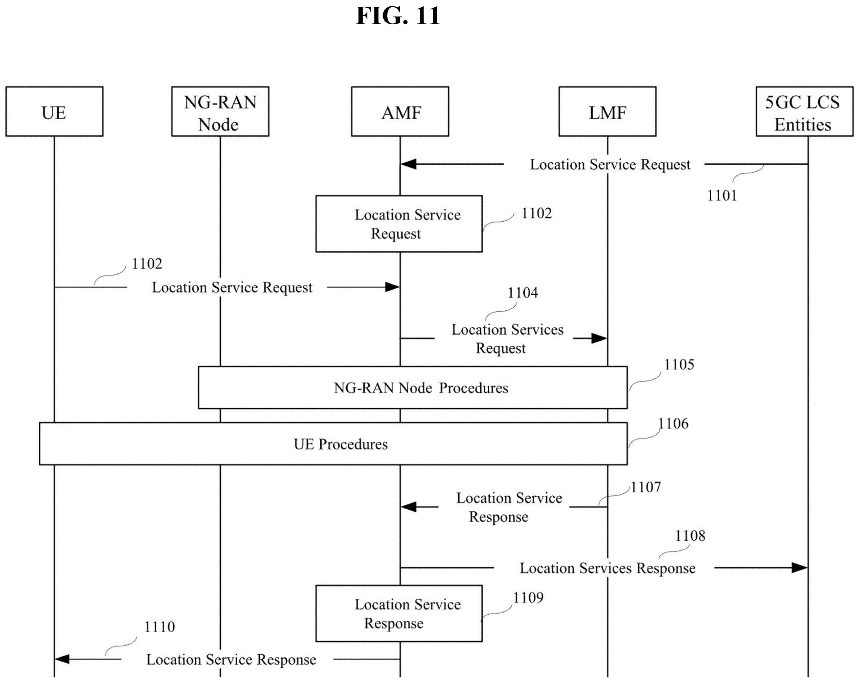

FIG. 11 illustrates an example of location services supported in a NG-RAN.

When a UE is in a connection management idle (CM-IDLE) state, if an AMF receives a location service request, the AMF performs a network trigger service request to configure signaling for a connection to the UE and allocation of a specific serving gNB/ng-eNB. In FIG. 11, it is assumed that the UE is in the connected mode.

Location service requests for the UE may be triggered, and the requests for the UE may be one of steps 1101, 1102, and 1103. For example, an entity in a 5GC such as a GMLC may request location services (e.g., positioning) for a target UE from a serving AMF (1101). Alternatively, the serving AMF may trigger location services (e.g., to find the UE for emergency calls) for the target UE itself (1102). Further, the UE may request location services (e.g., positioning or assistance data transfer) from the serving AMF at the NAS level (1103).

The AMF forwards the location service request to an LMF (1104).

The LMF provides services in the NG-RAN to acquire location measurements or assistance data and initiates a positioning procedure with a neighboring ng-eNB/gNBs (1105).

(Instead of or additionally to step 1105) The LMF initiates the positioning procedure with the UE to obtain location estimates or positioning measurements or transmit location assistance data to the UE (1106).

The LMF provides a location service response to the AMF (1107) (e.g., success or failure and location estimates for the UE if obtained).

(In step 1101) The AMF provides the location service response to the 5GC entity (1108) (e.g., location estimates for the UE).

(In step 1102) The AMF supports the services triggered in step 1102 based on the location service response received in step 1107 (1109) (e.g., providing location estimates related to emergency calls to the GMLC).

(In step 1103) The AMF provides the location service response to the UE (1110) (e.g., location estimates for the UE).

## ISAC (Integrated Sensing and Communication)

Various methods for using wireless sensing are being widely discussed in recent wireless communication systems. In general, the conventional radar technology may be considered for the purpose of wireless sensing. However, there may be constraints associated with radar technology for sensing, as it is specialized for sensing and may not consider the characteristics of communication. Additionally, separate devices may be required for transmitting and receiving nodes to transmit and receive signals for wireless sensing. To address these issues, methods for using wireless sensing in wireless communication systems that support cellular networks, such as 5G and/or next-generation 6G, are actively being researched. For example, these methods include integrated sensing and communication (ISAC) or joint communication and sensing (JCAS).

In 3GPP standardization, studies for supporting ISAC in 5G/6G have been initiated. According to TR 22.837 published by 3GPP SA1 WG, wireless sensing is defined as a technology that uses radio waves to measure a distance, angle, or instantaneous velocity for the purpose of acquiring information on the environment and/or surrounding objects. A scenario where sensing and communication share the same frequency band and hardware is being considered. In addition, methods of sharing or reusing radio waves intended for communication (e.g., RSs for communication such as an SSB, DMRS, CSI-RS, and/or SRS) for radio waves for sensing or methods of designing separate radio waves for wireless sensing may also be considered.

In general, wireless sensing supported in ISAC involves a process where signals transmitted from the transmitter are reflected off a target object and received by the receiver. Depending on the relationship between the transmitter and receiver, different sensing modes may be defined. Based on whether the transmitter and receiver are matched, a case where the transmitter and receiver are matched may be defined as a mono-static sensing mode, and a case where the transmitter and receiver are not matched may be defined as a bi-static sensing mode.

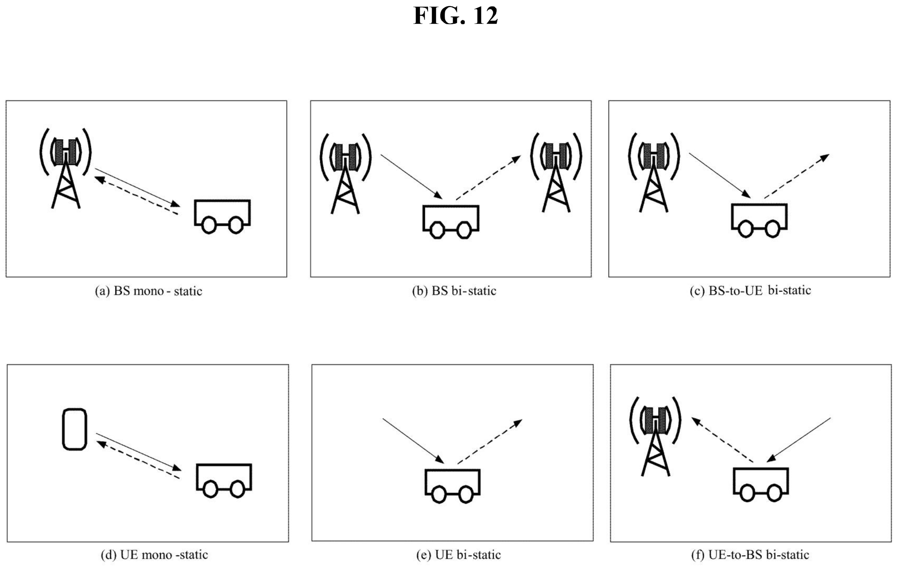

FIG. 12 illustrates examples of wireless sensing modes supported in ISAC.

Referring to FIG. 12, considering the transmission and reception operations in the 3GPP standard and the nodes participating therein, sensing modes may be broadly categorized as follows.

(a) BS mono-static sensing mode: A BS that transmits a radio wave receives a reflected signal.
(b) BS-to-BS bi-static sensing mode: Another BS receives a reflected signal of a radio wave transmitted by a specific BS.
(c) BS-to-UE bi-static sensing mode: A UE receives a reflected signal of a radio wave transmitted by a BS.
(d) UE mono-static sensing mode: A UE that transmits a radio wave receives a reflected signal.
(e) UE-to-UE bi-static sensing mode: Another UE receives a reflected signal of a radio wave transmitted by a specific transmitting UE.
(f) UE-to-BS bi-static sensing mode: A BS receives a reflected signal of a radio wave transmitted by a transmitting UE.

In addition to the six use cases described above, a sensing mode including multiple transmitting/receiving nodes may be referred to a multi-static sensing mode.

The application of wireless sensing through ISAC/JCAS is being considered in various scenarios. Generally, wireless sensing is considered for the purpose of acquiring information on a target with no communication module (or independent of communication modules). For example, considerable scenarios may be broadly divided into three scenarios.

(1) Object detection and tracking: This scenario aims to detect target objects or people and track location information. For example, the following scenarios: intrusion detection in indoor/outdoor environments, tracking the position of an unmanned aerial vehicle (UAV) or automated guided vehicle (AGV), and supporting autonomous driving may be considered.
(2) Environment monitoring: This scenario aims to collect information on the surrounding environment of transmitting/receiving nodes. For example, the following scenarios: rainfall observation and flood detection may be considered.
(3) Motion monitoring: This scenario aims to detect the motion of a target. For example, scenarios for distinguishing human movements or gestures may be considered.

The performance metrics and levels required for each of the above scenarios may vary and differ from one another. To design suitable ISAC/JCAS for the service quality required for each scenario, various key performance requirements need to be considered. In the 3GPP standard, TS 22.137, key performance requirements required for each service scenario are defined as follows: positioning estimation accuracy, velocity estimation accuracy, reliability (confidence level), sensing resolution, missed detection probability, false alarm probability, maximum sensing service delay, and refreshing rate. The required levels for each key performance requirement may vary depending on the service scenario.

The proposals to be discussed below may also be applied to the above-described ISAC environment.

**DL RSPD measurement related to CPP**

In NR, various techniques may be used for performing positioning. As described above, timing-based methods (e.g. DL-TDOA, UL-RTOA, Multi-RTT), angle-based methods (e.g. AoA, AoD), and cell ID-based methods (e.g. E-CID) may be used.

In addition, in Rel-18, the introduction of carrier phase measurement (CPM)-based positioning (hereinafter, CPP) is being discussed. In CPP, to measure the propagation delay of a reference signal caused by the distance between the BS and the UE, phase measurement may be performed/used based on the carrier frequency of a received signal.

**Positioning-related operation based on information regarding adjacent PRU**

The proposals to be discussed below may also be applied to the aforementioned ISAC environment. For example, ISAC wireless sensing techniques may be used in selecting/searching adjacent PRUs.

In 3GPP NR, various techniques may be used for performing positioning. As described above, timing-based methods (e.g. DL-TDOA, UL-RTOA, Multi-RTT), angle-based methods (e.g. AoA, AoD), and cell ID-based methods (e.g.

E-CID) may be used.

In addition, in Rel-18, the introduction of CPP is being discussed. In CPP, to measure the propagation delay of a reference signal caused by the distance between the BS and the UE, phase measurement may be performed/used based on the carrier frequency of a received signal

CPP considers a positioning method based on phase measurement on a carrier frequency. Considering that a high carrier frequency is generally used, distance information measured through the phase measurement may be highly precise. For example, if a carrier frequency of 3 GHz is used for transmitting and receiving a reference signal, the length of one wavelength, where the phase changes from 0 to $2\pi$, may be approximately 9.99 cm. Therefore, the precision of the distance distinguishable through the phase measurement may be at the centimeter level. On the other hand, to ensure such precise positioning, it is necessary to consider the impact of phase errors that may affect the phase measurement. The occurrence of phase errors may be caused by various factors such as the implementation accuracy of the transmitter and receiver, instantaneous errors occurring in hardware components, channel conditions due to the mobility of the transmitter and receiver and multipath environments, and inaccurate prior information. Such phase errors may affect the results of the phase measurement and significantly degrade positioning accuracy.

As a method of mitigating/cancelling the impact of phase errors to improve the positioning accuracy of CPP, a differencing/differential method based on the differences among multiple received measurements may be used. The differencing method may include a single differencing/differential method and a double differencing/differential method. The simpler single differencing method may be applied to i) a case where multiple receiving nodes receive a signal transmitted by one transmitting node, and ii) a case where one receiving node receives multiple signals transmitted by multiple transmitting nodes. As an example of case i), two phase measurements affected by phase errors may be considered as shown below.

[Equation 3]

$$\phi^1{}_k = \phi^1{}_{tx} - \phi^1{}_{rx} - 2\pi(f_c + k\Delta f)\tau_0 + \eta^1{}_k$$

$$\phi^2{}_k = \phi^2{}_{tx} - \phi^2{}_{rx} - 2\pi(f_c + k\Delta f)\tau_0 + \eta^2{}_k$$

In Equation 3, $\Phi^i{}_k$ denotes the phase measurement on the k-th subcarrier of a signal received by the i-th node, and $\Phi^i{}_{tx}$ and $\Phi^i{}_{rx}$ represent the effects of initial phase errors applied to the signal received by the i-th node. In addition, $f_c$ and $\Delta f$ represent a carrier frequency and a subcarrier spacing (SCS), respectively, and $\eta^i{}_k$ represents errors caused by effects such as additive white Gaussian noise (AWGN). If the above phase measurements experience the same initial phase error at the receiver (i.e., $\Phi^1{}_{rx} = \Phi^2{}_{rx}$), the effect of $\Phi^{rx}_i$ may be removed by applying a differencing method that takes the difference between $\Phi^1{}_k$ and $\Phi^2{}_k$. The effect of $\Phi^i{}_{tx}$ may also be removed by the same concept.

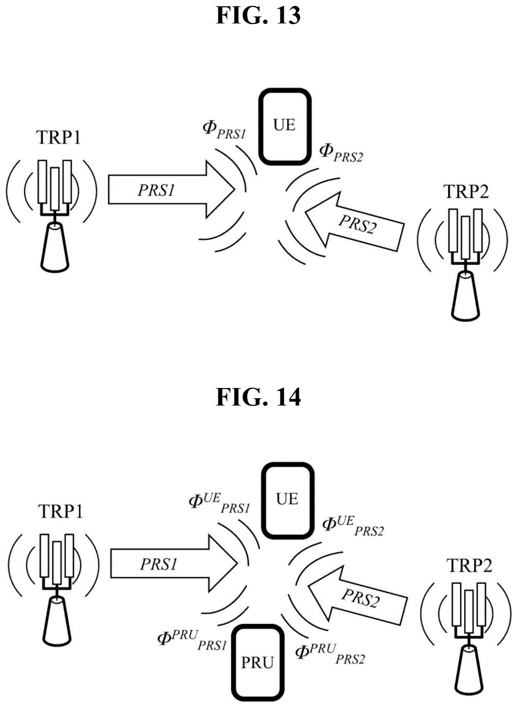

Meanwhile, FIG. 13 illustrates case ii) where one receiving node receives multiple signals transmitted by multiple transmitting nodes according to a single differencing method based on a DL PRS. Referring to FIG. 13, TRP1 and TRP2 respectively transmit PRS1 and PRS2 to the same UE. TRP1 and TRP2 may correspond to a target TRP and a reference TRP, respectively. The UE measures the phase of received PRS1 to obtain $\Phi_{PRS1}$ and measures the phase of received PRS2 to obtain $\Phi_{PRS2}$. The phase error may be canceled by using the difference between $\Phi_{PRS1}$ and $\Phi_{PRS2}$.

The double differencing/differential method is a method of using multiple single differencing/differential results.

FIG. 14 illustrates an example of a double differencing method for a DL PRS. Compared to FIG. 13, FIG. 14 additionally includes a PRU, which is a separate device that measures PRS1/2. i) The difference between $\Phi^{PRU}_{PRS1}$, the phase of PRS1 received at the PRU, and $\Phi^{PRU}_{PRS2}$, the phase of PRS2 received at the PRU, is a single differencing result measured by the PRU. ii) The difference between $\Phi^{UE}_{PRS1}$, the phase of PRS1 received at the UE, and $\Phi^{UE}_{PRS2}$, the phase of PRS2 received at the UE, is a single differencing result measured by the UE. The double differencing result may be obtained through the difference between i) the single differencing result measured by the PRU and ii) the single differencing result measured by the UE.

Meanwhile, the measurement results of a PRU may be useful for removing phase errors, particularly phase errors occurring at the transmitter. The PRU refers to a UE whose location information is known (or estimated with relatively high accuracy). When the PRU measures a PRS transmitted from a TRP at a specific time, it may be used to estimate a transmission error that occurs at the TRP for the specific time and PRS. When estimating the position of a target UE, measurement information obtained by the target UE and measurement information obtained by the PRU UE, or transmission error information derived therefrom may be used to perform more precise positioning. For such precise positioning, it is necessary to consider cases where the same transmission error occurs in measurements performed by both the target UE, which is the subject of positioning, and the PRU UE. To this end, the following conditions may need to be satisfied: the UE and PRU need to measure the same PRS resource at the same time. A higher-level node such as a location server may provide UEs and PRUs, which are the targets of positioning, with information regarding measurement requirements or recommendations. The information may include details about PRS resources to be measured by the UE and the timing at which the PRS resources need to be measured.

The improvement in positioning accuracy obtainable through the PRU may vary depending on the relative position between the PRU and the UE, which is the target of positioning. For example, according to TR 38.859, a study result on Rel-18 positioning, it may be confirmed that the closer the positioning target UE is to the PRU used for double differencing/differential purposes, the better the performance of CPP. Therefore, to achieve precise CPP performance, it may be necessary to select an appropriate PRU according to the location and environment of the positioning target UE and to design the measurement operation based thereon. However, based on the Rel-17 NR standard and the currently discussed standard technologies in Rel-18, it may not be easy for a specific UE to know the location information of another UE and utilize the information according to the supported standard technologies.

In consideration of the above characteristics and issues, the present disclosure describes methods of generating and providing appropriate positioning measurement-related information by considering information regarding a relative location between two different UEs (or among multiple UEs), and methods of operating higher-level nodes (e.g. TRP or location server) and UEs based thereon. The different UEs may include a UE that is the subject of location estimation (hereinafter, target UE) and/or a PRU.

In the present disclosure, the proposed methods are mainly described with a focus on how the measurements of the target UE and the PRU are used for the purpose of phase error elimination in CPP. However, the scope of rights is not limited thereto, and the methods may be generally applied to various positioning techniques in which the PRU is used to obtain the positioning accuracy of the target UE through processes such as controlling errors that affect reference signals transmitted and received for positioning.

In the present disclosure, the proposed methods are mainly described with a focus on DL positioning techniques in which the UE receives and measures PRS resources transmitted by the TRP. However, the present disclosure is not limited thereto. The present disclosure may also be generally applied to UL positioning techniques in which the TRP receives and measures SRS resources transmitted by the UE (e.g. target UE or PRU), or to DL+UL positioning techniques that include both DL and UL.

In the present disclosure, the proposed methods are described by assuming that the PRU is assumed to be a UE whose location is accurately known by the location server (or higher-level node such as a gNB/TRP). However, the present disclosure is not limited thereto. The present disclosure may also be applied to cases where a general UE (e.g. another target UE) that satisfies specific conditions performs the role of a PRU. The specific conditions may include, for example, requirements on positioning accuracy or the reliability thereof.

In the present disclosure, the proposed methods are mainly described with a focus on supported DL-based positioning techniques based on the 3GPP NR system. However, the present disclosure is not limited thereto and may also be applied to other positioning techniques capable of measuring the location of the UE.

The proposed methods may be implemented in combination of one or more methods or independently without combination. Some of the terms, symbols, or orders used may be replaced with other terms, symbols, or orders as long as the principles of the present disclosure are maintained.

In the following, the term "location server" may be used with the same meaning as "positioning server." The term "location server" may be used as a concept that includes the functions of the E-SMLC, SLP, and/or LMF.

In the following, the term "preconfigured positioning assistance information" may refer to preconfigured information provided by the location server or BS to the UE. The preconfigured positioning assistance information may refer to information used to support simultaneous measurement or reporting between different devices (e.g., a target UE and a PRU). As a specific example, the preconfigured positioning assistance information may include information regarding PRS resources to be measured by the UE and information regarding a measurement timing.

In the following, the term "simultaneous measurement" refers to an operation in which two or more devices (e.g., UEs) measure a specific reference signal on the same time resource. The simultaneous measurement may also be applied when additional conditions are included (e.g., a condition in which the RF frequency used as the basis for CPM is matched).

In the following, the term "UE" may be used as a concept that includes either or both of a target UE and/or PRU, unless otherwise specified.

In the following, a reference signal carrier phase difference (RSPD) may also be referred to as a reference signal carrier phase difference (RSCPD).

**[Proposal 1] Provision of multiple preconfigured positioning assistance information**

Proposal 1 may include that the location server or BS provides multiple preconfigured positioning assistance information to the UE. To this end, the location server may configure one or more pieces of positioning assistance information and provide the information to the UE via LPP or to the BS via NRPPa (or LPPa). If the BS receives one or more pieces of preconfigured positioning assistance information or related information from the location server, the BS may provide the necessary information to the UE. Specifically, higher layer signaling such as SIB or UE-dedicated RRC may be used

Whether the UE is capable of obtaining the preconfigured positioning assistance information may be determined by the UE capability. If the UE has the UE capability for the preconfigured positioning assistance information, the UE may report the capability, and the higher-level node (e.g. BS or location server) may perform related operations based on the reported UE capability. The UE capability may indicate whether CPP is supported, or the UE capability may be information related to the acquisition of the preconfigured positioning assistance information, independently of CPP support. If the UE capability is related to the acquisition of the preconfigured positioning assistance information, the UE capability may be designed to include further details. For example, such details may include the maximum number of pieces of preconfigured positioning assistance information the UE is capable of receiving and processing. Additionally/alternatively, the details may include the types of preconfigured positioning assistance information the UE is capable of receiving and processing.

The BS and UE may perform measurements for PRS resources based on the multiple preconfigured positioning assistance information which are configured/provided. For example, the UE may determine the PRS resources to be measured and the reception timing thereof based on one or more pieces of the received preconfigured positioning assistance information.

As a specific example, the target UE may receive multiple preconfigured positioning assistance information through higher layer signaling (e.g. LPP or SIB/dedicated RRC) transmitted by the higher-level node (e.g. location server or BS). The target UE may determine the PRS resources to be measured and timing thereof based on part of the received preconfigured positioning assistance information and perform measurement accordingly. This may be advantageous in terms of power saving for the UE.

As a specific example, the PRU may receive multiple preconfigured positioning assistance information through higher layer signaling (e.g. LPP or SIB/dedicated RRC) transmitted by the higher-level node (e.g. location server or BS). The PRU may perform measurement for all PRS resources and timing determined by all of the received preconfigured positioning assistance information. This may be for the purpose of obtaining all available measurement information in cases where the measurements of the PRU are used to improve the positioning accuracy of the target UE.

Each of the configured/provided multiple preconfigured positioning assistance information may be assigned an indicator (e.g. index). For example, when N pieces of preconfigured positioning assistance information are provided by the location server, different N integers may be assigned as indicators to the preconfigured positioning assistance information.

When multiple preconfigured positioning assistance information are configured/provided in this way, each piece of preconfigured positioning assistance information may be configured to represent measurement-related information for different PRUs. Upon receiving the information, the target UE may be configured to be provided with an opportunity to perform simultaneous measurement with respect to adjacent PRUs.

When multiple preconfigured positioning assistance information are configured/provided in this way, additional methods for supporting an operation in which the UE selects part of the provided information may be applied together. This may be for the purpose of enabling the UE to perform measurements by utilizing/applying appropriate preconfigured positioning assistance information in consideration of adjacent UEs, thereby improving positioning accuracy while achieving power saving and complexity reduction for the UEs. Specifically, one of the following methods or a combination thereof may be used.

[Proposal 1-1] <u>The higher-level node indicates part of multiple **preconfigured** positioning assistance information.</u>

Proposal 1-1 includes that when multiple preconfigured positioning assistance information are provided to the UE by the location server or BS, part of the preconfigured positioning assistance information are recommended or indicated to a specific UE by the location server or BS. To this end, the location server may select one or more pieces of preconfigured positioning assistance information for the target UE from among the previously provided multiple preconfigured positioning assistance information and then provide the selected information to the UE via LPP or to the BS via NRPPa (or LPPa). If the BS receives one or more pieces of preconfigured positioning assistance information selected for a specific UE or related information from the location server, the BS may provide the necessary information to the UE. Specifically, higher layer signaling such as SIB or UE-dedicated RRC may be used

When Proposal 1-1 is applied, if the UE capability reported by the UE includes the maximum number of pieces of preconfigured positioning assistance information that the UE is capable of receiving and processing, the information represented by the UE capability may be defined as the maximum number of pieces of preconfigured positioning assistance information that the UE is capable of processing simultaneously. This may indicate that the maximum number of pieces of preconfigured positioning assistance information configured/provided by the higher-level node and stored by the UE may be greater than the number indicated by the UE capability. It may also indicate that the maximum number of pieces of preconfigured positioning assistance information recommended/indicated by the higher-level node and/or actually applicable simultaneously by the UE may be determined by the UE capability.

When indicators are assigned and used for the configured multiple preconfigured positioning assistance information, the indicators may be used by the higher-level node to recommend/indicate part of the multiple preconfigured positioning assistance information configured for the UE. For example, if the higher-level node provides the UE with an indicator of specific preconfigured positioning assistance information to recommend/indicate the information, the UE may receive the indicator and determine preconfigured positioning assistance information to apply based on the previously received multiple preconfigured positioning assistance information and the indicators thereof.

As a specific example, the target UE may receive multiple preconfigured positioning assistance information through higher layer signaling (e.g. LPP or SIB/dedicated RRC) transmitted by the higher-level node (e.g. location server or BS). Subsequently, the target UE may receive information regarding recommended indicator(s) provided by the higher-level node. The target UE may determine the PRS resources and timing to be measured based on the configured multiple preconfigured positioning assistance information and the recommended indicator information, and perform measurement. When the location server is capable of estimating the position of the UE based on the measurement report from the UE as in UE-assisted positioning, the location server may determine a PRU suitable for the target UE (e.g., adjacent PRU), and notify the target UE of the related preconfigured positioning assistance information. This may be advantageous for supporting simultaneous measurement between the adjacent target UE and PRU. It also offers the benefit of adaptively providing information regarding PRS resources that are suitable for measurement at the location of the target UE.

As a specific example, the PRU may receive multiple preconfigured positioning assistance information through higher layer signaling (e.g. LPP or SIB/dedicated RRC) transmitted by the higher-level node (e.g. location server or BS). Subsequently, the PRU may receive information regarding indicated indicator(s) provided by the higher-level node. The PRU may determine the PRS resources and timing to be measured based on the configured multiple preconfigured positioning assistance information and the indicated indicator information, and perform measurement. When the location server is capable of estimating the position of the UE based on the measurement report from the UE as in UE-assisted positioning, the location server may determine a PRU suitable for the target UE (e.g., adjacent PRU), and notify the target UE of the related preconfigured positioning assistance information. This may be advantageous for supporting simultaneous measurement between the adjacent target UE and PRU. It also offers the benefit of adaptively providing information regarding PRS resources that are suitable for measurement at the location of the target UE. When the location server is capable of estimating the position of the UE based on the measurement report from the UE as in UE-assisted positioning, the location server may identify specific target UEs located adjacent to the PRU, and to support the positioning of the target UEs, may indicate to the PRU appropriate preconfigured positioning assistance information (e.g., information matching or similar to the PRS resources and timing to be measured by the target UEs). This may be advantageous for supporting simultaneous measurement between the adjacent target UE and the PRU. Specifically, to apply the double differencing technique, a reference signal measured by the target UE should be the same as a reference signal measured by the PRU. Therefore, when performing UE-assisted positioning, the target UE may select an adjacent PRU that is advantageous for improving positioning accuracy, measure the same reference signal as the signal measured by the selected PRU, and report the measurement to the network.

In addition, since the proposed method does not change the signaling transmission/reception or measurement procedure of the target UE and the measurement operation of the PRU is capable of being controlled as needed, it may provide benefits such as power saving, complexity reduction, and reduction of measurement reporting overhead for the PRU.

As another method for the BS to recommend/indicate specific preconfigured positioning assistance information for a specific UE, an activation/deactivation method based on a MAC CE may be considered. For example, it may be indicated through an LCID that the MAC CE includes information related to the preconfigured positioning assistance information. If the MAC CE includes recommendation/indication information for the preconfigured positioning assistance information, the MAC CE may contain indicator information of the corresponding preconfigured positioning assistance information. If the UE is capable of performing measurement by applying only one piece of preconfigured positioning assistance information at a time, the indicator information included in the MAC CE indicates activation of the corresponding preconfigured positioning assistance information. If there is previously used preconfigured positioning assistance information, the information may be deactivated simultaneously. If the UE is capable of performing measurement by applying two or more pieces of preconfigured positioning assistance information simultaneously, the MAC CE may include an additional field indicating activation/deactivation thereof, along with the indicator information of the preconfigured positioning assistance information.

Proposal 1-1 may be advantageous in that the higher-level node may determine appropriate preconfigured positioning assistance information based on the location information of the UE, thereby supporting an efficient simultaneous measurement operation.

[Proposal 1-2] The higher-level node provides multiple **preconfigured** positioning assistance information along with PRU location information.

Proposal 1-2 may include that when the location server or BS provides multiple preconfigured positioning assistance information to the UE, the location information of the UE corresponding to each piece of preconfigured positioning assistance information is also provided. In this case, the UE corresponding to the preconfigured positioning assistance information refers to a UE that performs positioning measurement based on the information. For example, the UE may refer to a UE that performs measurement using the PRS resources and measurement timing included in the preconfigured positioning assistance information. The UE corresponding to the preconfigured positioning assistance information may characteristically be a PRU. For convenience of description, the term "PRU" will be used in the following.

Proposal 1-2 may be suitable for UE-based positioning techniques in which the UE directly estimates the location thereof. For example, the UE may compare previously calculated location information thereof with location information of each PRU provided by the higher-level node, select an appropriate (or adjacent) PRU, and use preconfigured positioning assistance information corresponding to the appropriate PRU.

The location information of the UE corresponding to the preconfigured positioning assistance information provided to the UE may include the coordinate information of the PRU. For example, information identical or similar to LocationCoordinates defined in the TS 37.355 standard may be defined and used. This may provide the beneficial effect of accurately delivering the coordinate information of the PRU to the UE.

The location information of the UE corresponding to the preconfigured positioning assistance information provided to the UE may include measurements performed by the PRU. For example, to support the target UE in estimating the location of the PRU, measurement information such as AoD, RSRP, RSTD (or ToA) for the PRS resources measured by the PRU may be provided to the UE. This may be optionally supported as a method in which the target UE receives additional PRU measurements in addition to CPM for performing double differencing for CPP purposes.

Proposal 1-2 may provide advantageous effects in that the UE may directly select appropriate preconfigured positioning assistance information without additional signaling overhead when the UE directly performs positioning as in UE-based positioning or when the UE is configured with multiple preconfigured positioning assistance information,

**[Proposal 2]** <u>Selection and provision</u> of PRU-related <u>information based on UE request</u>

Proposal 2 may include the selection and provision of PRU-related information based on a request from the UE. In this case, the PRU-related information may include preconfigured positioning assistance information or measurement information obtained from the PRU. To this end, the UE may be configured to request the configuration or update of the PRU-related information from the higher-level node. For example, the UE may send such a request to receive new PRU-related information or to request changes in the previously received PRU-related information. The UE may send the request to the location server via LPP or to the BS via assistance information based on a MAC CE, DCI, or RRC.

As a specific method for the UE to request PRU-related information from the higher-level node, at least one of the following options may be used.

(Option 2-1) When the higher-level node provides multiple preconfigured positioning assistance information to the UE, the UE may report the preconfigured positioning assistance information selected by the UE to the higher-level node. For example, if indicator information is provided together with the preconfigured positioning assistance information is provided, the UE may perform the request operation by reporting the indicator information. When the UE needs to receive measurements from the PRU (e.g. CPM reception for performing double differencing) as in UE-based positioning, the higher-level node may provide the UE with information regarding the PRU measurements based on (or corresponding to) the information requested by the UE. This provides advantageous effects in that the UE selects preconfigured positioning assistance information depending on the situation, thereby enhancing the operational flexibility of the UE. It also offers the benefit of allowing the UE to adaptively select a suitable PRU when the UE directly performs positioning as in UE-based positioning. Additionally, since the UE already stores the necessary information, it may reduce the latency required for the transmission and reception of preconfigured positioning assistance information.

(Option 2-2) When the higher-level node provides only information regarding the locations of multiple PRUs to the UE, the UE may select a preferred PRU and report the PRU to the higher-level node. For example, if indicator information for each PRU is provided along with the location information, the UE may perform the request operation by reporting the indicator information. In this case, multiple preconfigured positioning assistance information are not provided in advance. After receiving the PRU preference information reported by the UE, the higher-level node may provide the UE with preconfigured positioning assistance information based on (or corresponding to) the information. When the UE needs to receive measurements from the PRU (e.g. CPM reception for performing double differencing) as in UE-based positioning, the higher-level node may provide the UE with information regarding the PRU measurements based on (or corresponding to) the information requested by the UE. This may be suitable for the purpose of reducing the resource overhead required to provide multiple preconfigured positioning assistance information to the UE. It also offers the advantage of allowing the UE to adaptively select an appropriate PRU when the UE directly performs positioning as in UE-based positioning.

(Option 2-3) The UE may be configured to request the higher-level node to provide PRU-related information corresponding to a PRU that has not been previously configured for the UE. That is, when the higher-level node provides only single PRU-related information to the UE, if the UE determines that the previous PRU-related information is no longer valid, the UE may request an update according to this option. Alternatively, even when the higher-level node has provided multiple PRU-related information to the UE, if the UE requires additional PRU-related information or determines that the previous PRU-related information is not valid, the UE may request an update according to this option. To support this, the information requested by the UE to the higher-level node may include a 1-bit field indicating a request to configure or update PRU-related information. Subsequently, the higher-level node may configure and provide specific PRU-related information (e.g. preconfigured positioning assistance information, PRU locations, or PRU measurements) to the UE. This may be suitable for reducing the resource overhead required to provide multiple preconfigured positioning assistance information to the UE. It offers the advantage of allowing the UE to request information other than the previously configured PRU-related information as needed.

**[Proposal 31** <u>Determination of validity of preconfigured positioning assistance information</u>

Proposal 3 may include a mechanism for determining the validity of preconfigured positioning assistance information along with operational methods for the higher-level node and the UE when the preconfigured positioning assistance information is configured for the UE by the higher-level node such as the location server or BS. The mechanism for determining the validity of the preconfigured positioning assistance information may refer to methods for determining whether the UE is capable of using the preconfigured positioning assistance information the UE receives. For example, if the validity is not satisfied, the UE may determine that the preconfigured positioning assistance information is no longer valid and may stop the related operation. Alternatively, the UE may initiate a procedure for updating the preconfigured positioning assistance information. To this end, the higher-level node may provide the UE with validity determination information along with the preconfigured positioning assistance information. Alternatively, the validity determination information may be predefined (e.g., defined by standards) and used accordingly.

The applicability of Proposal 3 may be determined only when the UE is in a specific state, or the applicability of Proposal 3 may vary. The specific state may refer to the RRC state of the UE. For example, the validity determination may be applied only to the UE in the RRC inactive state. If the validity determination for preconfigured positioning assistance information is applied to the UE in the RRC inactive state, validity determination information may be provided through a suspend message received by the UE during the RRC release. Unlike the RRC connected state, where dedicated data transmission and reception between the higher-level node and the UE (e.g. a PUSCH/PDSCH using a C-RNTI) is feasible, the RRC inactive state does not provide sufficient procedures to selectively control specific UE operations or to allow the UE to report the information thereof. Accordingly, Proposal 3 may aim to determine the availability of preconfigured positioning assistance information without additional signaling, in order to prevent unnecessary UE operations and ensure stable positioning performance.

The validity determination mechanism proposed in Proposal 3 may be implemented according to one of the following methods or any combination thereof.

<u>(Proposal 3-1) Determination of validity of preconfigured positioning assistance information based on timer</u>

Proposal 3-1 may include configuring a timer for determining the validity of preconfigured positioning assistance information. To this end, the higher-level node such as the location server or BS may configure the duration of the timer corresponding to the preconfigured positioning assistance information and provide the timer duration along with the preconfigured positioning assistance information. Alternatively, the timer duration may be determined based on a predefined rule (e.g. defined by a standard). The higher-level node and UE may assume that the timer starts counting from the time the UE receives the preconfigured positioning assistance information and/or timer information. If the timer expires (e.g. after the configured timer duration has elapsed), it may be assumed that the corresponding preconfigured positioning assistance information is no longer valid.

The timer for the preconfigured positioning assistance information may be updated or terminated based on specific conditions. For example, if the higher-level node indicates the termination of all preconfigured positioning assistance information corresponding to a specific timer, the timer may be terminated accordingly. As another example, if the validity determination based on the timer for preconfigured positioning assistance information is applied only in a specific RRC state, and the UE transitions to a different RRC state, the timer may also be terminated. For example, when the UE is configured with new preconfigured positioning assistance information, the timer may be restarted based on the reception time of the preconfigured positioning assistance information. The UE may be instructed to restart the timer through a MAC CE transmitted by the BS or through LPP provided by the location server.

Proposal 3-1 provides advantageous effects in that the positioning efficiency of the UE is ensured without additional signaling overhead even when dedicated signaling between the higher-level node and UE is not feasible. It also offers the benefit of not increasing the implementation complexity of the UE because a simple timer-based operation is used.

(Proposal 3-2) Determination of validity of preconfigured positioning assistance information based on reference signal measurement results

Proposal 3-2 may include using the measurements for specific reference signal(s) to determine the validity of preconfigured positioning assistance information. Specifically, based on the measurement of a specific reference signal at the time the UE is configured with the preconfigured positioning assistance information from the higher-level node, it may be determined that the preconfigured positioning assistance information remains valid while the magnitude/state of the reference signal measurement is maintained. On the other hand, if the magnitude/state of the reference signal measurement changes (e.g., beyond a specific threshold), it may be determined that the preconfigured positioning assistance information is no longer valid.

The reference signals used for the above-mentioned reference signal measurement may include reference signals transmitted by the BS, such as an SSB, a PRS, a CSI-RS, and a TRS. The target reference signal used for this purpose may be included in validity determination information provided by the higher-level node or may be determined based on a predefined rule (e.g., defined by a standard). In the present disclosure, reference signals used for such validity determination are referred to as "validity reference signals," and the proposed methods will be described based on the terminology.

As one specific method of Proposal 3-2, the validity of preconfigured positioning assistance information may be determined based on changes in the RSRP value of the validity reference signal or based on the absolute value of the RSRP. For example, the RSRP value of the validity reference signal measured at the time the target preconfigured positioning assistance information is received is compared with the RSRP value measured at a specific point in time. If the change is within a specific threshold, the preconfigured positioning assistance information may be determined to be valid. Otherwise, the preconfigured positioning assistance information may be determined to be no longer valid. To this end, the specific threshold may be included in the validity determination information provided by the higher-level node or may be determined based on a predefined rule (e.g., defined by a standard). As another example, if the RSRP value of the validity reference signal measured by the UE at a specific point in time is within a specific range, the corresponding preconfigured positioning assistance information may be considered valid. Otherwise, the preconfigured positioning assistance information may be considered no longer valid. To support this, the specific threshold may be included in the validity determination information provided by the higher-level node or may be determined based on a predefined rule (e.g., defined by a standard).

As a specific example of Proposal 3-2, if the UE attempts to receive the validity reference signal but fails (i.e., if the UE fails to perform the measurement), the corresponding preconfigured positioning assistance information may be determined to be invalid.

Proposal 3-2 provides advantageous effects in that the positioning efficiency of the UE is ensured without additional signaling overhead even when dedicated signaling between the higher-level node and UE is not feasible. Additionally, due to the use of the validity determination procedure based on the measurement of the UE, it offers the advantage of enabling validity determination that reflects the effects of significant changes in the UE location or variations in the wireless channel environment.

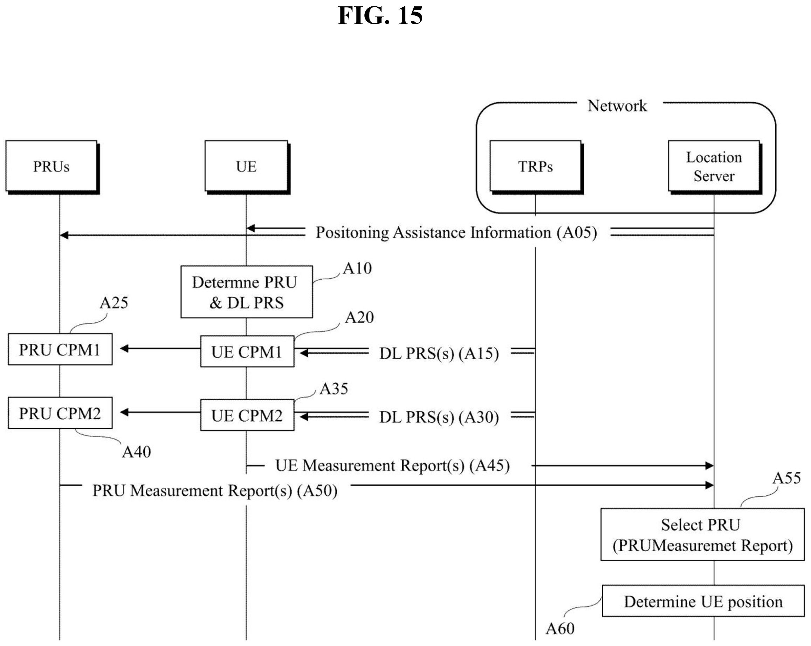

FIG. 15 is a diagram for illustrating a positioning-related procedure performed in a wireless communication system according to an embodiment.

Referring to FIG. 15, a location server may signal positioning assistance information to a UE and a PRU respectively via TRP(s) (A05). The positioning assistance information provided to the UE may include information regarding a plurality of PRUs. For example, the positioning assistance information may be the preconfigured positioning assistance information described above. The information regarding the plurality of PRUs may include at least one of information regarding a DL PRS resource measured at each PRU or information regarding a measurement timing of each PRU.

The UE may determine at least one PRU from among the plurality of PRUs and DL PRS(s) related to the PRU based on the positioning assistance information (A10). The at least one PRU may be selected based on PRU location information. For example, a PRU located in proximity to the UE may be preferentially selected. In other words, the PRU may be selected based on the distance between the UE and each PRU. The PRU location information may be received from a network or may be directly obtained through wireless sensing for ISAC.

The UE may receive the determined DL PRS(s) from the TRP(s) (A15) and measure the DL PRS(s) (A20). The PRU selected by the UE may also receive the same DL PRS(s) from the TRP(s) (A15) and measure the DL PRS(s) (A25). The UE and PRU selected by the UE may simultaneously measure the same DL PRS on the same time resource. The measurement of the UE/PRU may include CPP for the PRS.

Such DL PRS measurement by the UE/PRU may be performed multiple times (A35/A40).

The UE may transmit a UE measurement report based on the measurement of the DL PRS(s) (A45).

Each PRU may also transmit a PRU measurement report based on the measurement of the DL PRS(s) (A50).

The location server may select at least one PRU that measures the same DL PRS(s) as those measured by the UE and/or a measurement report of the corresponding PRU based on the measurement report from the UE (A55).

The location server may determine the location of the UE based on the measurement report from the UE and the measurement report from the PRU (A60). For example, each of the measurement report from the UE and the measurement report from the PRU may relate to an RSCPD. The measurement report from the PRU may be used to obtain a double differencing value for the measurement report from the UE. The location server may more accurately estimate the location of the UE by eliminating phase errors from the UE measurement report based on the double differencing.

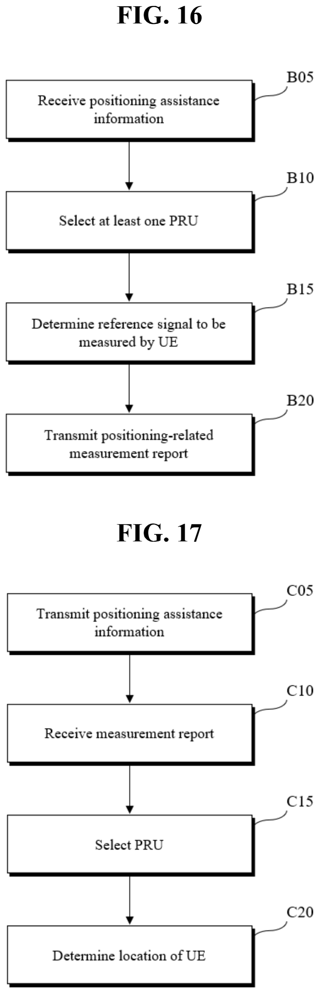

FIG. 16 illustrates a flow of a method for transmitting a measurement report by a UE according to an embodiment.

Referring to FIG. 16, the UE may receive positioning assistance information including information regarding a plurality of PRUs from a network (B05). For example, the positioning assistance information may be the preconfigured positioning assistance information described above.

The UE may select at least one PRU from among the plurality of PRUs based on the positioning assistance information (B10).

The UE may determine at least one reference signal to be measured by the UE from among a plurality of reference signals based on the selection of the at least one PRU (B15).

The UE may transmit a positioning-related measurement report based on measurement of the determined at least one reference signal (B20).

Each of the at least one reference signal measured by the UE may be identical to a reference signal measured by each PRU selected by the UE.

The UE and each PRU selected by the UE may respectively measure the at least one reference signal on a same time resource.

The information regarding the plurality of PRUs may include at least one of resource information for each reference signal measured by each PRU or measurement timing information for each PRU.

The at least one PRU may be selected based on PRU location information. For example, a PRU located in proximity to the UE may be preferentially selected. In other words, the PRU may be selected based on the distance between the UE and each PRU.

The information regarding the plurality of PRUs may include the PRU location information.

The PRU location information may be obtained through wireless sensing for ISAC.

Validity of the positioning assistance information may be determined based on at least one of the measurement of the at least one reference signal by the UE or a timer.

The measurement of the at least one reference signal by the UE may include reference signal carrier phase measurement.

FIG. 17 illustrates a flow of a method of receiving a measurement report by a network node according to an embodiment. For example, the network node may include at least one of a BS or a location server.

Referring to FIG. 17, the network node may transmit positioning assistance information including information regarding a plurality of PRUs to a UE (C05). For example, the positioning assistance information may be the preconfigured positioning assistance information described above.

The network node may receive a measurement report from the UE on at least one of a plurality of reference signals measured by the plurality of PRUs (C10).

The network node may also receive measurement reports from the plurality of PRUs.

The network node may select at least one PRU from among the plurality of PRUs that measures a same reference signal as measured by the UE based on the measurement report from the UE (C15).

The network node may determine a location of the UE based on the measurement report from the UE and a measurement report from the selected at least one PRU (C20).

For example, each of the measurement report from the UE and the measurement report from the PRU may be for CPP based on CPM of a reference signal (e.g., RSCPD). The measurement report from the PRU may be used to obtain a double differencing value for the measurement report from the UE. The network node may more accurately estimate the location of the UE by eliminating phase errors from the UE measurement report based on the double differencing.

The UE and the selected PRUs may respectively measure a same reference signal on a same time resource and report the measurement to the network node.

The information regarding the plurality of PRUs may include at least one of resource information for each reference signal measured by each PRU or measurement timing information for each PRU.

The information regarding the plurality of PRUs may include the PRU location information.

Validity of the positioning assistance information may be determined based on at least one of the measurement of the at least one reference signal by the UE or a timer.

Each of the measurement report from the UE and the measurement report from the PRU may be related to CPM of a reference signal.

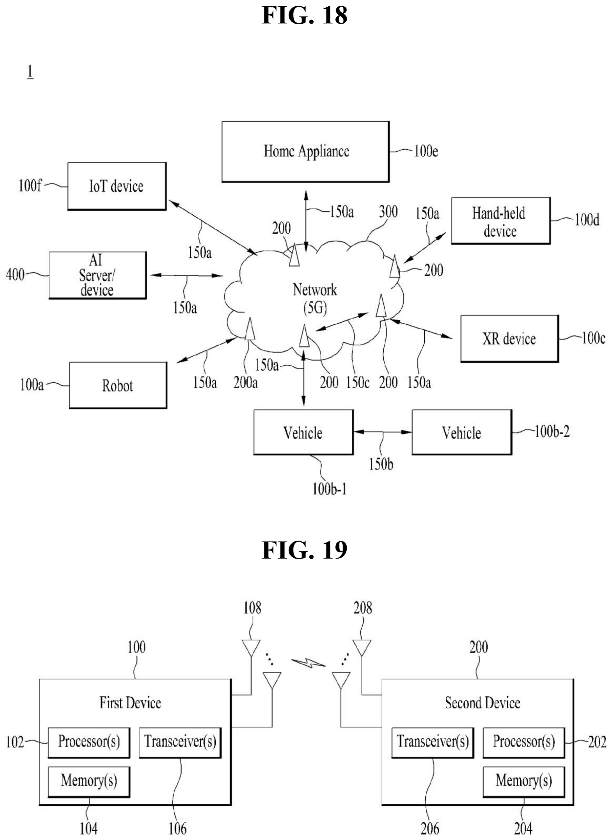

FIG. 18 illustrates a communication system 1 applied to the present disclosure.

Referring to FIG. 18, a communication system 1 applied to the present disclosure includes wireless devices, Base Stations (BSs), and a network. Herein, the wireless devices represent devices performing communication using Radio Access Technology (RAT) (e.g., 5G New RAT (NR)) or Long-Term Evolution (LTE)) and may be referred to as communication/radio/5G devices. The wireless devices may include, without being limited to, a robot 100a, vehicles 100b-1 and 100b-2, an eXtended Reality (XR) device 100c, a hand-held device 100d, a home appliance 100e, an Internet of Things (IoT) device 100f, and an Artificial Intelligence (AI) device/server 400. For example, the vehicles may include a vehicle having a wireless communication function, an autonomous driving vehicle, and a vehicle capable of performing communication between vehicles. Herein, the vehicles may include an Unmanned Aerial Vehicle (UAV) (e.g., a drone). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g. Vehicle-to-Vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100f/BS 200, or BS 200/BS 200. Herein, the wireless communication/connections may be established through various RATs (e.g., 5G NR) such as uplink/downlink communication 150a, sidelink communication 150b (or, D2D communication), or inter BS communication (e.g. relay, Integrated Access Backhaul (IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

FIG. 19 illustrates wireless devices applicable to the present disclosure.

Referring to FIG. 19, a first wireless device 100 and a second wireless device 200 may transmit radio signals through a variety of RATs (e.g., LTE and NR). Herein, {the first wireless device 100 and the second wireless device 200} may correspond to {the wireless device 100x and the BS 200} and/or {the wireless device 100x and the wireless device 100x} of FIG. 18.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operational flowcharts disclosed in this document. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver 106 and then store information obtained by processing the second information/signals in the memory(s) 104. The memory(s) 104 may be connected to the processor(s) 102 and may store a variety of information related to operations of the processor(s) 102. For example, the memory(s) 104 may store software code including commands for performing a part or the entirety of processes controlled by the processor(s) 102 or for performing the descriptions, functions, procedures, proposals, methods, and/or operational flowcharts disclosed in this document. Herein, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 may be interchangeably used with Radio Frequency (RF) unit(s). In an embodiment of the present disclosure, the wireless device may represent a communication modem/circuit/chip.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operational flowcharts disclosed in this document. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information obtained by processing the fourth information/signals in the memory(s) 204. The memory(s) 204 may be connected to the processor(s) 202 and may store a variety of information related to operations of the processor(s) 202. For example, the memory(s) 204 may store software code including commands for performing a part or the entirety of processes controlled by the processor(s) 202 or for performing the descriptions, functions, procedures, proposals, methods, and/or operational flowcharts disclosed in this document. Herein, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 may be interchangeably used with RF unit(s). In an embodiment of the present disclosure, the wireless device may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more Service Data Unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by Read-Only Memories (ROMs), Random Access Memories (RAMs), Electrically Erasable Programmable Read-Only Memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

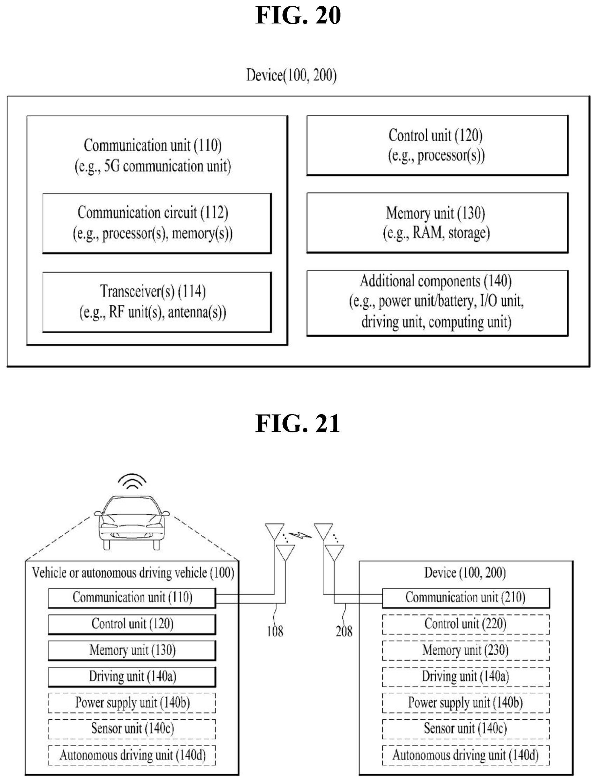

FIG. 20 illustrates another example of a wireless device applied to the present disclosure. The wireless device may be implemented in various forms according to a use-case/service (refer to FIG. 18).

Referring to FIG. 20, wireless devices 100 and 200 may correspond to the wireless devices 100 and 200 of FIG. 19 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204 of FIG. 19. For example, the transceiver(s) 114 may include the one or more transceivers 106 and 206 and/or the one or more antennas 108 and 208 of FIG. 19. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot (100a of FIG. 18), the vehicles (100b-1 and 100b-2 of FIG. 18), the XR device (100c of FIG. 18), the hand-held device (100d of FIG. 18), the home appliance (100e of FIG. 18), the IoT device (100f of FIG. 18), a digital broadcast terminal, a hologram device, a public safety device, an MTC device, a medicine device, a fintech device (or a finance device), a security device, a climate/environment device, the AI server/device (400 of FIG. 18), the BSs (200 of FIG. 18), a network node, etc. The wireless device may be used in a mobile or fixed place according to a use-example/service.

In FIG. 20, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor, an Electronic Control Unit (ECU), a graphical processing unit, and a memory control processor. As another example, the memory 130 may be configured by a Random Access Memory (RAM), a Dynamic RAM (DRAM), a Read Only Memory (ROM)), a flash memory, a volatile memory, a non-volatile memory, and/or a combination thereof.

FIG. 21 illustrates a vehicle or an autonomous driving vehicle applied to the present disclosure. The vehicle or autonomous driving vehicle may be implemented by a mobile robot, a car, a train, a manned/unmanned Aerial Vehicle (AV), a ship, etc.

Referring to FIG. 21, a vehicle or autonomous driving vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110. The blocks 110/130/140a to 140d correspond to the blocks 110/130/140 of FIG. 20, respectively.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous driving vehicle 100. The control unit 120 may include an Electronic Control Unit (ECU). The driving unit 140a may cause the vehicle or the autonomous driving vehicle 100 to drive on a road. The driving unit 140a may include an engine, a motor, a powertrain, a wheel, a brake, a steering device, etc. The power supply unit 140b may supply power to the vehicle or the autonomous driving vehicle 100 and include a wired/wireless charging circuit, a battery, etc. The sensor unit 140c may acquire a vehicle state, ambient environment information, user information, etc. The sensor unit 140c may include an Inertial Measurement Unit (IMU) sensor, a collision sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultrasonic sensor, an illumination sensor, a pedal position sensor, etc. The autonomous driving unit 140d may implement technology for maintaining a lane on which a vehicle is driving, technology for automatically adjusting speed, such as adaptive cruise control, technology for autonomously driving along a determined path, technology for driving by automatically setting a path if a destination is set, and the like.

For example, the communication unit 110 may receive map data, traffic information data, etc. from an external server. The autonomous driving unit 140d may generate an autonomous driving path and a driving plan from the obtained data. The control unit 120 may control the driving unit 140a such that the vehicle or the autonomous driving vehicle 100 may move along the autonomous driving path according to the driving plan (e.g., speed/direction control). In the middle of autonomous driving, the communication unit 110 may aperiodically/periodically acquire recent traffic information data from the external server and acquire surrounding traffic information data from neighboring vehicles. In the middle of autonomous driving, the sensor unit 140c may obtain a vehicle state and/or surrounding environment information. The autonomous driving unit 140d may update the autonomous driving path and the driving plan based on the newly obtained data/information. The communication unit 110 may transfer information about a vehicle position, the autonomous driving path, and/or the driving plan to the external server. The external server may predict traffic information data using AI technology, etc., based on the information collected from vehicles or autonomous driving vehicles and provide the predicted traffic information data to the vehicles or the autonomous driving vehicles.

The above-described embodiments correspond to combinations of elements and features of the present disclosure in prescribed forms. And, the respective elements or features may be considered as selective unless they are explicitly mentioned. Each of the elements or features can be implemented in a form failing to be combined with other elements or features. Moreover, it is able to implement an embodiment of the present disclosure by combining elements and/or features together in part. A sequence of operations explained for each embodiment of the present disclosure can be modified. Some configurations or features of one embodiment can be included in another embodiment or can be substituted for corresponding configurations or features of another embodiment. And, an embodiment may be configured by combining claims failing to have relation of explicit citation in the appended claims together or can be included as new claims by amendment after filing an application.

Those skilled in the art will appreciate that the present disclosure may be carried out in other specific ways than those set forth herein without departing from the spirit and essential characteristics of the present disclosure. The above embodiments are therefore to be construed in all aspects as illustrative and not restrictive. The scope of the disclosure should be determined by the appended claims and their legal equivalents, not by the above description, and all changes coming within the meaning and equivalency range of the appended claims are intended to be embraced therein.

## INDUSTRIAL APPLICABILITY

The present disclosure is applicable to UEs, BSs, or other apparatuses in a wireless mobile communication system.

## Claims

1. A method of transmitting a measurement report by a user equipment (UE) in a wireless communication system, the method comprising:

   receiving positioning assistance information comprising information regarding a plurality of positioning reference units (PRUs) from a network;
   selecting at least one PRU from among the plurality of PRUs based on the positioning assistance information;
   determining at least one reference signal to be measured by the UE from among a plurality of reference signals based on the selection of the at least one PRU; and
   transmitting a positioning-related measurement report based on measurement of the determined at least one reference signal.

2. The method of claim 1, wherein each of the at least one reference signal measured by the UE is identical to a reference signal measured by each PRU selected by the UE.

3. The method of claim 1, wherein the UE and each PRU selected by the UE respectively measure the at least one reference signal on a same time resource.

4. The method of claim 1, wherein the information regarding the plurality of PRUs comprises at least one of resource information for each reference signal measured by each PRU or measurement timing information for each PRU.

5. The method of claim 1, wherein the at least one PRU is selected based on PRU location information.

6. The method of claim 5, wherein the information regarding the plurality of PRUs comprises the PRU location information.

7. The method of claim 5, wherein the PRU location information is obtained through wireless sensing for integrated sensing and communication (ISAC).

8. The method of claim 1, wherein validity of the positioning assistance information is determined based on at least one of the measurement of the at least one reference signal by the UE or a timer.

9. The method of claim 1, wherein the measurement of the at least one reference signal by the UE comprises reference signal carrier phase measurement.

10. A processor-readable recording medium having recorded thereon a program for executing the method of claim 1.

11. A device for wireless communication, the device comprising:

   a memory configured to store instructions; and
   a processor configured to perform operations by executing the instructions,
   wherein the operations of the processor comprise:

   receiving positioning assistance information comprising information regarding a plurality of positioning reference units (PRUs) from a network;
   selecting at least one PRU from among the plurality of PRUs based on the positioning assistance information;
   determining at least one reference signal to be measured by the device from among a plurality of reference signals based on the selection of the at least one PRU; and
   transmitting a positioning-related measurement report based on measurement of the determined at least one reference signal.

12. The device of claim 11, further comprising a transceiver,
   wherein the device is a user equipment (UE) operating in a wireless communication system.

13. The device of claim 11, wherein the device is a processing device configured to control a user equipment (UE) operating in a wireless communication system.

14. A method of receiving a measurement report by a network node in a wireless communication system, the method comprising:

   transmitting positioning assistance information comprising information regarding a plurality of positioning reference units (PRUs) to a user equipment (UE);
   receiving a measurement report from the UE on at least one of a plurality of reference signals measured by the plurality of PRUs;
   selecting at least one PRU from among the plurality of PRUs that measures a same reference signal as measured by the UE based on the measurement report from the UE; and
   determining a location of the UE based on the measurement report from the UE and a measurement report from the selected at least one PRU.

15. A network node configured to operate in a wireless communication system, the network node comprising:

   a memory configured to store instructions; and
   a processor configured to perform operations by executing the instructions,
   wherein the operations of the processor comprise:

   transmitting positioning assistance information comprising information regarding a plurality of positioning reference units (PRUs) to a user equipment (UE);

receiving a measurement report from the UE on at least one of a plurality of reference signals measured by the plurality of PRUs;

selecting at least one PRU from among the plurality of PRUs that measures a same reference signal as measured by the UE based on the measurement report from the UE; and

determining a location of the UE based on the measurement report from the UE and a measurement report from the selected at least one PRU.

# FIG. 1

| Initial Cell Search | System Information Reception | Random Access Procedure | General DL/UL Tx/Rx S18 |
|---|---|---|---|

PSS/SSS & [DLRS] & PBCH — S11

PDCCH/ PDSCH (BCCH) — S12

PRACH — S13 | PDCCH/ PDSCH — S14 | PRACH — S15 | PDCCH/ PDSCH — S16

PDCCH/ PDSCH — S17 | PUSCH/ PUCCH

- DL/UL ACK/NACK
- UE CQI/PMI/Rank Report using PUSCH and PUCCH

# FIG. 2

...... | One Frame (10ms) | ......

...... | Half-Frame (5ms) | Half-Frame (5ms) | ......

...... | Subframe 0 (1ms) | ...... | Subframe 4 (1ms) | Subframe 5 (1ms) | ...... | Subframe 9 (1ms) | ......

Subframe (1ms)

15KHz | Slot (14 symbols) | 1ms

30KHz | Slot 0 (14 symbols) | Slot 1 | 500us

60KHz | Slot 0 (14 symbols) | Slot 1 | Slot 2 | Slot 3 | 250us

120KHz | Slot 0 (14 symbols) | Slot 1 | Slot 2 | Slot 3 | Slot 4 | Slot 5 | Slot 6 | Slot 7 | 125us

# FIG. 3

Resource grid

A carrier
(up to 3300 subcarriers, i. e., 275 RBs)

A BWP

1 RB = 12 subcarriers

1 RE

1 subcarrier

1 symbol

# FIG. 4

# FIG. 5

# FIG. 6

UL grant-to-PUSCH offset (K2)

| PDCCH | | | | | PUSCH | | |

# FIG. 7

Reference Source

GNSS signals (B)

LPP

Measurements(A,B or A+B) or Location

Assistance Data

Target Device

UE/SET

Location server

E-SMLC/SLP/LMF

radio signals (A)

- E-CID Location Information Transfer
- OTDOA Information Transfer
- Reporting of General Error Situations

NRPPa

Reference Source

ACCESS NODE / BS / TS / NG-RAN

# FIG. 8

# FIG. 9

(a)

(b)

**FIG. 10**

EP 4 694 431 A2

## FIG. 11

**FIG. 11**

UE | NG-RAN Node | AMF | LMF | 5GC LCS Entities

- Location Service Request — 1101
- Location Service Request (1102)
- 1102 Location Service Request
- 1104 Location Services Request
- 1105 NG-RAN Node Procedures
- 1106 UE Procedures
- 1107 Location Service Response
- 1108 Location Services Response
- 1109 Location Service Response
- 1110 Location Service Response

EP 4 694 431 A2

# FIG. 12

(a) BS mono - static

(b) BS bi-static

(c) BS-to-UE bi-static

(d) UE mono -static

(e) UE bi-static

(f) UE-to-BS bi-static

EP 4 694 431 A2

# FIG. 13

# FIG. 14

**FIG. 15**

Network

TRPs | Location Server

UE

PRUs

Positoning Assistance Information (A05)

A10 — Determine PRU & DL PRS

A20 — UE CPM1

DL PRS(s) (A15)

A25 — PRU CPM1

A35 — UE CPM2

DL PRS(s) (A30)

A40 — PRU CPM2

UE Measurement Report(s) (A45)

PRU Measurement Report(s) (A50)

A55 — Select PRU (PRUMeasuremet Report)

A60 — Determine UE position

# FIG. 16

Receive positioning assistance information — B05

↓

Select at least one PRU — B10

↓

Determine reference signal to be measured by UE — B15

↓

Transmit positioning-related measurement report — B20

# FIG. 17

Transmit positioning assistance information — C05

↓

Receive measurement report — C10

↓

Select PRU — C15

↓

Determine location of UE — C20

# FIG. 18

# FIG. 19

# FIG. 20

Device(100, 200)

| Communication unit (110)<br>(e.g., 5G communication unit) | Control unit (120)<br>(e.g., processor(s)) |
| --- | --- |
| Communication circuit (112)<br>(e.g., processor(s), memory(s)) | Memory unit (130)<br>(e.g., RAM, storage) |
| Transceiver(s) (114)<br>(e.g., RF unit(s), antenna(s)) | Additional components (140)<br>(e.g., power unit/battery, I/O unit,<br>driving unit, computing unit) |

# FIG. 21

Vehicle or autonomous driving vehicle (100)

Communication unit (110)
Control unit (120)
Memory unit (130)
Driving unit (140a)
Power supply unit (140b)
Sensor unit (140c)
Autonomous driving unit (140d)

108    208

Device (100, 200)

Communication unit (210)
Control unit (220)
Memory unit (230)
Driving unit (140a)
Power supply unit (140b)
Sensor unit (140c)
Autonomous driving unit (140d)